(19) Europäisches Patentamt
European Patent Office
Office européen des brevets

(11) **EP 4 600 902 A1**

(12) **EUROPEAN PATENT APPLICATION**
published in accordance with Art. 153(4) EPC

(43) Date of publication:
**13.08.2025 Bulletin 2025/33**

(51) International Patent Classification (IPC):
*G06T 7/50* (2017.01)

(21) Application number: **23923771.2**

(22) Date of filing: **17.11.2023**

(52) Cooperative Patent Classification (CPC):
**G06T 3/40; G06T 3/04; G06T 5/30; G06T 5/50; G06T 5/70; G06T 7/11; G06T 7/194; G06T 7/50;** G06T 2207/10028; G06T 2207/20221

(86) International application number:
**PCT/CN2023/132283**

(87) International publication number:
**WO 2024/174608 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.02.2023 CN 202310201486**

(71) Applicant: **Tencent Technology (Shenzhen) Company Limited**
**Shenzhen, Guangdong 518057 (CN)**

(72) Inventor: **XU, Dingtian**
**Shenzhen, Guangdong 518057 (CN)**

(74) Representative: **Nederlandsch Octrooibureau**
**P.O. Box 29720**
**2502 LS The Hague (NL)**

(54) **DEPTH-OF-FIELD IMAGE RENDERING METHOD AND APPARATUS, ELECTRONIC DEVICE, COMPUTER READABLE STORAGE MEDIUM, AND COMPUTER PROGRAM PRODUCT**

(57)    The present application provides a depth-of-field image rendering method and apparatus, an electronic device, a computer readable storage medium, and a computer program product. The method comprises: acquiring a depth image of an image to be rendered, and performing pixel segmentation on the depth image to obtain at least two pixel blocks; acquiring depth-of-field parameters of the pixel blocks, and classifying the at least two pixel blocks on the basis of the depth-of-field parameters to obtain categories to which the pixel blocks belong; for each category of pixel blocks, on the basis of the position of each pixel block in the category in the depth image, determining a pixel area of the pixel block of the corresponding category in the image to be rendered, and performing blurring processing on the pixel area on the basis of a blurring processing mode corresponding to the corresponding category so as to obtain a blurred image; and on the basis of the image to be rendered and the blurred image, obtaining a depth-of-field image corresponding to the image to be rendered.

A server obtains a depth image of a to-be-rendered image, and performs pixel tiling on the depth image, to obtain at least two pixel tiles — 101

Obtain a depth-of-field parameter of each pixel tile, and classify the at least two pixel tiles based on the depth-of-field parameter, to obtain a category to which each pixel tile belongs — 102

Determine, for a pixel tile of each category, a pixel region of each pixel tile of the category in the to-be-rendered image based on a location of the pixel tile of the category in the depth image, and perform blurring processing on the pixel region based on a blurring processing manner corresponding to the category, to obtain a blurred image — 103

Obtain a depth-of-field image corresponding to the to-be-rendered image based on the to-be-rendered image and the blurred image — 104

**FIG. 3**

EP 4 600 902 A1

**Description**

RELATED APPLICATION

Embodiments of this application are proposed based on Chinese Patent Application No. 202310201486.4, filed on February 23, 2023, and claims priority to the Chinese Patent.

FIELD OF THE TECHNOLOGY

The present disclosure relates to the field of computer technologies, and in particular, to a method and device for rendering a depth-of-field image, an electronic device, a computer-readable storage medium, and a computer program product.

BACKGROUND OF THE DISCLOSURE

In the related art, when a depth-of-field image is rendered, if a rendering process needs to be reduced, many non-physical adjustment parameters need to be used. In this way, a user needs to repeatedly adjust parameters such as a transition region and a transition blurring degree each time the user focuses on a picture, causing a very undesirable rendering effect. If an ideal rendering effect needs to be achieved based on a relatively small quantity of adjustment parameters, a relatively large quantity of rendering processes are needed, which not only has very high performance overheads, but also has relatively low efficiency when the depth-of-field image is rendered.

SUMMARY

Embodiments of the present disclosure provide a method and device for rendering a depth-of-field image, an electronic device, a computer-readable storage medium, and a computer program product, so that efficiency and a rendering effect of rendering a depth-of-field image can be improved.
Technical solutions in the embodiments of the present disclosure are implemented as follows:
An embodiment of the present disclosure provides a method for rendering a depth-of-field image, where the method includes:

obtaining a depth image of a to-be-rendered image, and performing pixel tiling on the depth image, to obtain at least two pixel tiles;

obtaining a depth-of-field parameter of each pixel tile, and classifying the at least two pixel tiles based on the depth-of-field parameter, to obtain a category to which each pixel tile belongs;

determining, for a pixel tile of each category, a pixel region of each pixel tile of the category in the to-be-rendered image based on a location of the pixel tile of the category in the depth image, and performing blurring processing on the pixel region based on a blurring processing manner corresponding to the category, to obtain a blurred image; and

obtaining a depth-of-field image corresponding to the to-be-rendered image based on the to-be-rendered image and the blurred image.

An embodiment of the present disclosure provides a device for rendering a depth-of-field image, where the device includes:

a first obtaining module, configured to: obtain a depth image of a to-be-rendered image, and perform pixel tiling on the depth image, to obtain at least two pixel tiles;

a second obtaining module, configured to: obtain a depth-of-field parameter of each pixel tile, and classify the at least two pixel tiles based on the depth-of-field parameter, to obtain a category to which each pixel tile belongs;

a blurring processing module, configured to: determine, for a pixel tile of each category, a pixel region of each pixel tile in the to-be-rendered image based on a location of the pixel tile of the category in the depth image, and perform blurring processing on the pixel region based on a blurring processing manner corresponding to the category, to obtain a blurred image; and

a rendering module, configured to obtain a depth-of-field image corresponding to the to-be-rendered image based on the to-be-rendered image and the blurred image.

An embodiment of the present disclosure provides an electronic device, including:

a memory, configured to store computer executable instructions; and

a processor, configured to: when executing the computer executable instructions stored in the memory, implement the method for rendering a depth-of-field image provided in the embodiment of the present disclosure.

An embodiment of the present disclosure provides a computer-readable storage medium, storing computer executable instructions thereon. When the computer executable instructions are executed by a processor, a processor is caused to perform the method for rendering a depth-of-field image provided in the embodiment of the present disclosure.
An embodiment of the present disclosure provides a computer program product, where the computer program product includes a computer program or computer executable instructions, and the computer program or the computer executable instructions are stored in a computer-readable storage medium. A processor of an electronic device reads the computer executable instructions from the computer-readable storage medium, and the processor executes the computer executable instructions, so that the electronic device performs the the method for rendering a depth-of-field image provided in the embodiment of the present disclosure.
The embodiments of the present disclosure have the following beneficial effects:
First, pixel tiling is performed on a depth image of a to-be-rendered image, to obtain at least two pixel tiles; the at least two pixel tiles are classified based on a depth-of-field parameter corresponding to each pixel tile, to obtain a category to which each pixel tile belongs; blurring processing is performed on pixel regions corresponding to the pixel tiles in the to-be-rendered image according to different categories to which the pixel tiles belong and according to blurring processing manners corresponding to the categories, to obtain a blurred image; and finally, a depth-of-field image corresponding to the to-be-rendered image is obtained based on the to-be-rendered image and the blurred image. In this way, the pixel tiles are classified according to rendering parameters corresponding to different pixel tiles in a rendering process and complexity of the rendering process, so that for pixel tiles of different categories, rendering processes corresponding to the categories are performed, to obtain a final depth-of-field image. In this way, not only a rendering effect when the depth-of-field image is rendered is improved, but also the rendering processes when the depth-of-field image is rendered are reduced, thereby reducing performance consumption, and improving efficiency during image processing.

BRIEF DESCRIPTION OF THE DRAWINGS

FIG. 1 is a schematic architecture diagram of a system 100 for rendering a depth-of-field image according to an embodiment of the present disclosure.

FIG. 2 is a schematic structural diagram of an electronic device according to an embodiment of the present disclosure.

FIG. 3 is a schematic flowchart of a method for rendering a depth-of-field image according to an embodiment of the present disclosure.

FIG. 4 is a schematic diagram of a to-be-rendered image and a depth image corresponding to the to-be-rendered image according to an embodiment of the present disclosure.

FIG. 5 is a schematic diagram of a process of performing pixel tiling on a depth image according to an embodiment of the present disclosure.

FIG. 6 is a schematic diagram of performing dilation processing on each pixel tile according to an embodiment of the present disclosure.

FIG. 7 is a schematic diagram of performing blurring processing on a pixel region based on different blurring processing manners according to an embodiment of the present disclosure.

FIG. 8 is a schematic diagram corresponding to a blurred image and a region transition image according to an embodiment of the present disclosure.

FIG. 9 is a schematic diagram of a region partition image and a pre-blurred image according to an embodiment of the present disclosure.

FIG. 10 is a schematic diagram of a pre-blurred image and a region transition image according to an embodiment of the present disclosure.

FIG. 11 is a schematic diagram of performing image rendering based on a to-be-rendered image and a blurred image to obtain a depth-of-field image corresponding to the to-be-rendered image according to an embodiment of the present disclosure.

FIG. 12 is a schematic diagram of an effect of post-processing depth-of-field rendering based on tiling rendering according to an embodiment of the present disclosure.

FIG. 13 is a technical architecture diagram of post-processing depth-of-field rendering based on tiling rendering according to an embodiment of the present disclosure.

DESCRIPTION OF EMBODIMENTS

To make the objectives, technical solutions, and advantages of embodiments of the present disclosure clearer, the following describes embodiments of the present disclosure in detail with reference to the accompanying drawings. The described embodiments are not to be considered as a limitation to embodiments of the present disclosure. All other embodiments obtained by a person of ordinary skill in the art without creative efforts shall fall within the protection scope of embodiments of the present disclosure.

In the following description, the term "some embodiments" describes subsets of all possible embodiments, but "some embodiments" may be the same subset or different subsets of all the possible embodiments, and can be concatenated with each other without conflict.

In the following description, the terms "first", "second", and "third" are merely intended to distinguish between similar objects rather than describe specific orders. The terms "first", "second", and "third" may, where permitted, be interchangeable in a particular order or sequence, so that embodiments of the present disclosure described herein may be performed in an order other than that illustrated or described herein.

Unless otherwise defined, meanings of all technical and scientific terms used in this specification are the same as those usually understood by a person skilled in the art to which embodiments of the present disclosure belong. The terms used in this specification are merely intended to describe the embodiments of the present disclosure, and are not intended to limit the present disclosure.

Before embodiments of the present disclosure are described in detail, a description is made on terms in embodiments of the present disclosure, and the terms in embodiments of the present disclosure are applicable to the following explanations.

(1) A client is a program corresponding to a server that provides a local service to a user. In addition to some applications that can only run locally, the client is generally installed on an ordinary user device and needs to cooperate with the server to run. In other words, the client requires a corresponding server and service program in a network to provide a corresponding service. In this way, a specific communication connection needs to be established on the client and a server side, to ensure a normal operation of an application.

(2) A render target (RT) is configured for rendering a video memory buffer of a pixel, that is, a memory region. There may be a plurality of such memory regions at the same time, in other words, there may be a plurality of render targets at the same time.

(3) Circle of confusion (COC), that is, a circle of blurring, is configured for indicating that when an object point is imaged, an imaging beam of the object point cannot converge at a point due to aberration, and a diffuse circular projection is formed on an imaging plane. That is, before and after a focus, light rays converge and diverge, and an image of the point goes from a circle to the focus, and then diverge to a circle. Circles in front of and behind the focus are referred to as circles of confusion.

(4) Up-sampling is also referred to as image interpolation, and is configured for zooming in an image and improving a resolution of the image, such as using an interpolation method to improve the resolution.

(5) Pixel depth refers to a quantity of bits for storing each pixel, is also configured for measuring a color resolution of an image, and is configured for determining a quantity of possible colors of each pixel of a color image.

(6) Depth image: A depth refers to a Z coordinate of a pixel in the view camera coordinate system, and is unit space. A depth image may be obtained for any image. The depth image refers to a two-dimensional image in which depth values of all pixels of a single view are stored, and is a space unit such as millimeter. The meaning of the depth image is to express three-dimensional results of image matching with less storage space and orderly.

(7) Unreal engine (UE) is a set of engine tools that exist for developing real-time technologies. Currently, the UE is widely applied to 3D modeling rendering and game development. A complete tool suite and a simple working process thereof enable a developer to quickly modify or view an outcome, and have very low dependency on code.

(8) Depth-of-field (DOF) is configured for describing, in space, a distance range within which imaging can be clearly performed.

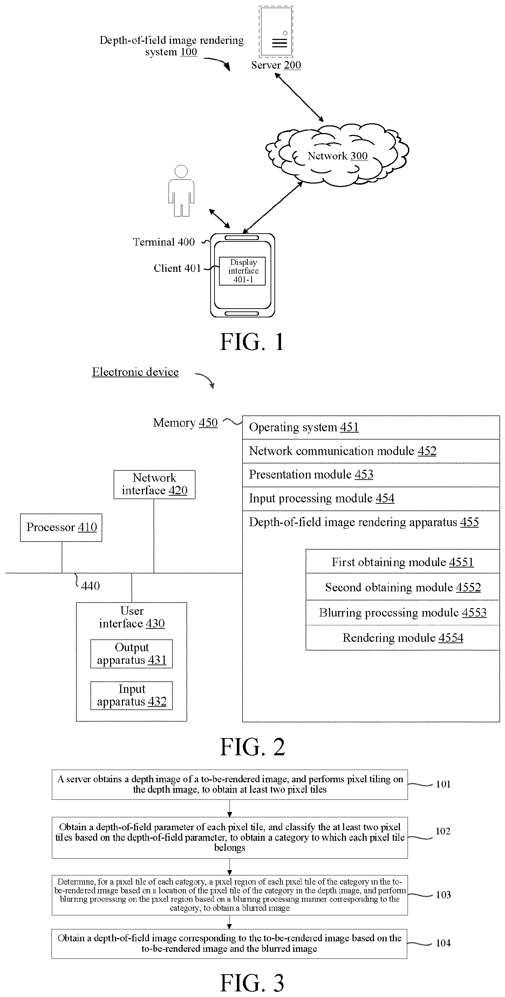

Referring to FIG. 1, FIG. 1 is a schematic architectural diagram of a system 100 the for rendering a depth-of-field image according to an embodiment of the present disclosure. To implement an application scenario of rendering a depth-of-field image (for example, the application scenario of rendering the depth-of-field image may be: when a to-be-rendered image is rendered, first performing pixel tiling on a depth image of the to-be-rendered image, to obtain at least two pixel tiles; then classifying the at least two pixel tiles based on a maximum value and a minimum value of a circle of confusion of each pixel tile, to obtain a category to which each pixel tile belongs and that is configured for indicating an image region to which the corresponding pixel tile belongs in the to-be-rendered image, where the image region is one of a focal region, a foreground region, a background region, and an intersection region of the to-be-rendered image; and then based on a rendering processing manner corresponding to the category, rendering the to-be-rendered image, to obtain a depth-of-field image corresponding to the to-be-rendered image), a terminal (a terminal 400 is shown as an example) is connected to a server 200 through a network 300. The network 300 may be a wide area network or a local area network, or a combination thereof. The terminal 400 is configured for a user to perform display on a display interface (a display interface 401-1 is shown as an example) by using a client 401. The terminal 400 and the server 200 are connected to each other through a wired or wireless network.

The server 200 is configured to: obtain a depth image of a to-be-rendered image, and perform pixel tiling on the depth image, to obtain at least two pixel tiles; obtain a depth-of-field parameter of each pixel tile, and classify the at least two pixel tiles based on the depth-of-field parameter, to obtain a category to which each pixel tile belongs; determine, for a pixel tile of each category, a pixel region of each pixel tile of the category in the to-be-rendered image based on a location of the pixel tile of the category in the depth image, and perform blurring processing on the pixel region based on a blurring processing manner corresponding to the category, to obtain a blurred image; obtain a depth-of-field image corresponding to the to-be-rendered image based on the to-be-rendered image and the blurred image; and send the depth-of-field image corresponding to the to-be-rendered image to the terminal 400.

The terminal 400 is further configured to: receive the depth-of-field image corresponding to the to-be-rendered image, and present the depth-of-field image based on the display interface.

In the embodiments of the present disclosure including the embodiments of both the claims and the specification (hereinafter referred to as "all embodiments of the present disclosure"), the server 200 may be preferably an independent physical server, or may be a server cluster or a distributed system formed by a plurality of physical servers, or may be a cloud server that provides basic cloud computing service such as a cloud service, a cloud database, cloud computing, a cloud function, cloud storage, a network service, cloud communication, a middleware service, a domain name service, a security service, a content distribution network (CDN), big data, and an artificial intelligence platform. The terminal 400 may include a smart phone, a tablet computer, a laptop, a desktop computer, a set-top box, an intelligent voice interaction device, a smart home appliance, an on-board terminal, an aircraft, and a mobile device (for example, a mobile phone, a portable music player, a personal digital assistant, a dedicated messaging device, a portable gaming device, a smart speaker, and a smart watch), and the like, but is not limited thereto. The terminal device may be connected directly or indirectly to the server in a wired or wireless communication manner, which is not limited in the present disclosure.

Referring to FIG. 2, FIG. 2 is a schematic structural diagram of an electronic device according to an embodiment of the present disclosure. During actual application, the electronic device may be the server 200 or the terminal 400 shown in FIG. 1. Refer to FIG. 2. The electronic device shown in FIG. 2 includes: at least one processor 410, a memory 450, at least one network interface 420, and a user interface 430. Components in the terminal 400 are coupled together by using a bus system 440. The bus system 440 is configured to implement connection and communication between these components. In addition to a data bus, the bus system 440 further includes a power bus, a control bus, and a state signal bus. However, for clear description, all types of buses in FIG. 2 are marked as the bus system 440.

The processor 410 may be an integrated circuit chip, and has a signal processing capability, for example, a general-purpose processor, a digital signal processor (DSP), another programmable logic device, a discrete gate or transistor logic device, or a discrete hardware component. The general-purpose processor may be a microprocessor or any conventional processor.

The user interface 430 includes one or more output apparatuses 431 that enable presentation of media content, including one or more speakers and/or one or more visual displays. The user interface 430 further includes one or more input apparatuses 432, including a user interface component that facilitates user input, such as a keyboard, a mouse, a microphone, a touchscreen display, a camera, another input button, and a control.

The memory 450 may be removable, non-removable, or a concatenation thereof. An exemplary hardware device includes a solid-state memory, a hard disk drive, an optical disk drive, and the like. In all embodiment of the present disclosure, the memory 450 preferably includes one or more storage devices physically located away from the processor 410.

The memory 450 includes a volatile memory or a non-volatile memory, or may include both a volatile memory and a non-volatile memory. The non-volatile memory may be a read-only memory (ROM), and the volatile memory may be a random access memory (RAM). The memory 450 described in this embodiment of the present disclosure is intended to include any suitable type of memory.

In all embodiment of the present disclosure, the memory 450 can store data to support various operations, and examples of the data include programs, modules, and data structures, or subsets or supersets thereof, as illustrated below.

An operating system 451 includes a system program configured to process various basic system services and perform hardware-related tasks, such as a frame layer, a core library layer, and a drive layer, and is configured to implement various basic services and process hardware-based tasks.

A network communication module 452 is configured to reach another electronic device via one or more (wired or wireless) network interfaces 420. For example, the network interface 420 includes: Bluetooth, wireless compatibility authentication (Wi-Fi), universal serial bus (USB), and the like.

A presentation module 453 is configured to enable presentation of information via one or more output apparatuses 431 (for example, a display and a speaker) associated with the user interface 430 (for example, a user interface for operating a peripheral device and displaying content and information).

An input processing module 454 is configured to detect one or more user inputs or interactions from the input apparatus 432 and translate a detected input or interaction.

In all embodiment of the present disclosure, the device provided in this embodiment of the present disclosure may be implemented in a software manner. FIG. 2 shows a device 455 for rendering a depth-of-field image stored in the memory 450. The device 455 may be software in the form of a program and a plug-in, and the like, and includes the following software modules: a first obtaining module 4551, a second obtaining module 4552, a blurring processing module 4553, and a rendering module 4554, which are logical modules. Therefore, any combination or further division may be performed according to an implemented function.

Functions of the modules are described below.

In some other embodiments, the device provided in this embodiment of the present disclosure may be implemented in a hardware manner. As an example, the device for rendering a depth-of-field image provided in this embodiment of the present disclosure may be a processor in the form of a hardware decoding processor. The processor is programmed to perform the method for rendering a depth-of-field image provided in embodiments of the present disclosure. For example, the processor in the form of a hardware decoding processor may use one or more application-specific integrated circuits (ASIC), DSPs, programmable logic devices (PLD), complex programmable logic devices (CPLD), field-programmable gate arrays (FPGA), or other electronic elements.

In all embodiment of the present disclosure, the terminal or the server may run a computer program to implement the method for rendering a depth-of-field image provided in this embodiment of the present disclosure. For example, the computer program may be a native program or a software module in an operating system, may be a native application (APP), that is, a program that needs to be installed in the operating system to run, such as an instant messaging APP, a web browser APP, may be a mini program, that is, a program that only needs to be downloaded into a browser environment to run; or may be a mini program that can be embedded into any APP. In summary, the computer program may be an application, a module, or a plug-in in any form.

Based on the foregoing descriptions of the system for rendering a depth-of-field image and the electronic device that are provided in the embodiments of the present disclosure, the following describes the method for rendering a depth-of-field image provided in the embodiment of the present disclosure. In actual implementation, the method for rendering a depth-of-field image provided in the embodiment of the present disclosure may be implemented separately by a terminal or a server, or may be implemented jointly by a terminal and a server. An example in which the server 200 in FIG. 1 independently performs the method for rendering a depth-of-field image provided in the embodiment of the present disclosure is configured for description. Referring to FIG. 3, FIG. 3 is a schematic flowchart of a method for rendering a depth-of-field image according to an embodiment of the present disclosure. The following describes operations shown with reference to FIG. 3.

Operation 101: A server obtains a depth image of a to-be-rendered image, and performs pixel tiling on the depth image, to obtain at least two pixel tiles.

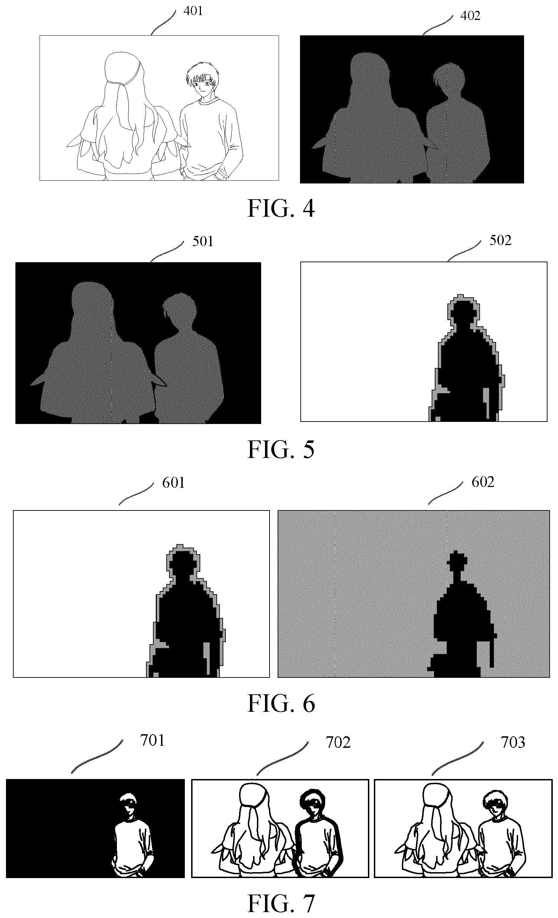

In actual implementation, the to-be-rendered image may be pre-stored locally, may be obtained from the outside (such as the Internet), or may be collected in real time, for example, collected in real time by a photographing apparatus. Herein, after obtaining the to-be-rendered image, the server obtains, based on the to-be-rendered image, the depth image corresponding to the to-be-rendered image, obtains the to-be-rendered image, and constructs a space coordinate system corresponding to the to-be-rendered image; determines, based on the to-be-rendered image, a height value of each pixel in the to-be-rendered image in the space coordinate system; and generates the depth image corresponding to the to-be-rendered image based on the height value. For example, referring to FIG. 4, FIG. 4 is a schematic diagram of a to-be-rendered image and a depth image corresponding to the to-be-rendered image according to an embodiment of the present disclosure. Based on FIG. 4, 401 shows the to-be-rendered image, and 402 shows the depth image corresponding to the to-be-rendered image. First, the to-be-rendered image shown in 401 is obtained, a space coordinate system corresponding to the to-be-rendered image is constructed, and a height value of each pixel in the to-be-rendered image in the space coordinate system is determined based on the to-be-rendered image, so as to generate the depth image corresponding to the to-be-rendered image shown in 402 based on the height value.

During actual implementation, a process of performing pixel tiling on the depth image, to obtain at least two pixel tiles may include: obtaining a preset size of a pixel tile; and partitioning, based on the size of the pixel tile, a plurality of pixels included in the depth image, to obtain at least two pixel tiles, the pixel tiles including a same quantity of pixels. The size of the pixel tile herein is preset, for example, 16*16 or 10*10, so that the plurality of pixels included in the depth image are partitioned based on the preset size of the pixel tile, to obtain at least two pixel tiles whose size is 16*16 or 10*10. For example, referring to FIG. 5, FIG. 5 is a schematic diagram of a process of performing pixel tiling on a depth image according to an embodiment of the present disclosure. Based on FIG. 5, 501 shows a depth image, and 502 shows at least two pixel tiles. Herein, when the preset size of the pixel tile is 16*16, pixel tiling is performed on the depth image, as shown in 501, with a full resolution, to obtain at least two pixel tiles, as shown in 502, with a size of 16*16.

Operation 102: Obtain a depth-of-field parameter of each pixel tile, and classify the at least two pixel tiles based on the depth-of-field parameter, to obtain a category to which each pixel tile belongs.

Pixel tiles of different categories correspond to different blurring processing manners, and the depth-of-field parameter is configured for indicating a change of a circle of confusion corresponding to the pixel tile, including a maximum value and a minimum value of the circle of confusion of the pixel tile. Therefore, the process of classifying the at least two pixel tiles based on the depth-of-field parameter, to obtain a category to which each pixel tile belongs may include: taking, for each pixel tile, a difference between the maximum value and the minimum value of the circle of confusion of the pixel tile, to obtain a change value of the circle of confusion of the pixel tile; and classifying the at least two pixel tiles based on the change value and the maximum value of the circle of confusion of each pixel tile, to obtain the category to which each pixel tile belongs.

During actual implementation, for a process of obtaining the depth-of-field parameter corresponding to each pixel tile, that is, obtaining the maximum value and the minimum value of the circle of confusion of each pixel tile, for each pixel tile, a value of a circle of confusion corresponding to each pixel in the pixel tile, that is, a radius of the circle of confusion, is obtained, and then a maximum value and a minimum value are selected from the values of the circle of confusion corresponding to the pixels as the maximum value and the minimum value of the circle of confusion corresponding to the pixel tile. Herein, a process of obtaining a value of a circle of confusion corresponding to each pixel in the pixel tile may be: obtaining diffusion parameters corresponding to the pixels, where the diffusion parameters include at least a diagram diameter of a lens, a focal distance of the lens, a focus location, an object distance, and the like, so that the value of the circle of confusion corresponding to the pixel, that is, the radius of the circle of confusion, is determined based on the diffusion parameters. That is:

$$COC = \left| \frac{A * F(P - D)}{2 * D(P - F)} \right| \qquad \text{Formula (1)}$$

COC is the radius of the circle of confusion, A is the diagram diameter, F is the focal distance, P is the focus location, and D represents the object distance.

The lens herein is configured for indicating a photographing lens of a photographing apparatus for the to-be-rendered image. After the locations of the lens and the imaging plane are determined, there is a location in front of the lens for focusing on the imaging plane, so that a distance between the location and the center of the lens is the focus location, and the object distance is configured for indicating a distance between an object and the lens, that is, a distance between a point on an object corresponding to a pixel and the lens.

During actual implementation, after the change value and the maximum value of the circle of confusion of each pixel tile are determined, the process of classifying the at least two pixel tiles based on the change value and the maximum value of the circle of confusion of each pixel tile, to obtain the category to which each pixel tile belongs may include:

separately performing the following processing on each pixel tile: determining the category to which the pixel tile belongs as a first category when the maximum value of the circle of confusion of the pixel tile is less than a target threshold, the first category being configured for indicating that the pixel tile belongs to a focal region in the to-be-rendered image; determining the category to which the pixel tile belongs as a second category when the change value of the circle of confusion of the pixel tile is less than a target threshold, the second category being configured for indicating that the pixel tile belongs to a foreground region or a background region in the to-be-rendered image; and determining the category to which the pixel tile belongs as a third category when the change value of the circle of confusion of the pixel tile is not less than a target threshold, the third category being configured for indicating that the pixel tile belongs to an intersection region of the foreground region and the background region in the to-be-rendered image.

The target threshold herein may be preset, for example, 1. When the maximum value of the circle of confusion of the pixel tile is less than 1, it is considered that the pixel tile is in the focal region in the to-be-rendered image, and the category to which the pixel tile belongs is determined as the first category. When the difference between the maximum value and the minimum value of the circle of confusion of the pixel tile is less than 1, it is considered that the pixel tile is within a region having a little change in the circle of confusion in the to-be-rendered image, such as the foreground region or the background region in the to-be-rendered image, and the category to which the pixel tile belongs is determined as the second category. In addition, in other cases than the foregoing two cases, that is, when the difference between the maximum value and the minimum value of the circle of confusion of the pixel tile is greater than or equal to 1, it is considered that the pixel tile is located in a region having a relatively large change in the circle of confusion in the to-be-rendered image, for example, the intersection region of the foreground region and the background region in the to-be-rendered image, so that the category to which the pixel tile belongs is determined as the third category.

In all embodiment of the present disclosure, the classifying the at least two pixel tiles based on the depth-of-field parameter, to obtain the category to which each pixel tile belongs may further be: performing region partitioning on the to-be-rendered image, to obtain the focal region, the foreground region, the background region, and the intersection region of the foreground region and the background region of the to-be-rendered image; determining, for each pixel tile based on the depth-of-field parameter, an image region to which the pixel tile belongs in the to-be-rendered image, the image region being one of the focal region, the foreground region, the background region, and the intersection region; and determining the category to which the pixel tile belongs based on the image region to which the pixel tile belongs.

The process of determining, based on the depth-of-field parameter, the image region to which the pixel tile belongs in the to-be-rendered image is similar to the foregoing process of classifying the at least two pixel tiles based on the depth-of-field parameter, to obtain the category to which each pixel tile belongs: taking, for each pixel tile, a difference between the maximum value and the minimum value of the circle of confusion of the pixel tile, to obtain a change value of the circle of confusion of the pixel tile; and determining, based on the change value and the maximum value of the circle of confusion of each pixel tile, the image region to which the pixel tile belongs in the to-be-rendered image. Herein, the process of determining, based on the change value and the maximum value of the circle of confusion of each pixel tile, the image region to which the pixel tile belongs in the to-be-rendered image may be: separately performing the following processing on each pixel tile: determining that the pixel tile belongs to the focal region in the to-be-rendered image when the maximum value of the circle of confusion of the pixel tile is less than the target threshold; determining that the pixel tile belongs to the foreground region or the background region in the to-be-rendered image when the change value of the circle of confusion of the pixel tile is less than the target threshold; and determining that the pixel tile belongs to the intersection region of the foreground region and the background region in the to-be-rendered image when the change value of the circle of confusion of the pixel tile is not less than the target threshold. Therefore, the category to which the pixel tile belongs is determined based on the image region to which the pixel tile belongs, and the category to which the pixel tile belongs is determined as the first category when the pixel tile belongs to the focal region in the to-be-rendered image; the category to which the pixel tile belongs is determined as the second category when the pixel tile belongs to the foreground region or the background region in the to-be-rendered image; and the category to which the pixel tile belongs is determined as the third category when the pixel tile belongs to the intersection region of the foreground region and the background region in the to-be-rendered image.

In all embodiment of the present disclosure, after pixel tiling is performed on the depth image, to obtain the at least two pixel tiles, dilation processing may further be performed on each pixel tile, to obtain a dilated pixel tile. Therefore, a process of obtaining the depth-of-field parameter corresponding to each pixel tile may be obtaining a depth-of-field parameter corresponding to each dilated pixel tile. Therefore, the at least two dilated pixel tiles are classified based on the depth-of-field parameter corresponding to each dilated pixel tile, to obtain the category to which each dilated pixel tile belongs. For example, referring to FIG. 6, FIG. 6 is a schematic diagram of performing dilation processing on each pixel tile according to an embodiment of the present disclosure. Based on FIG. 6, 601 shows an image corresponding to a pixel tile on which dilation processing is not performed, 602 shows an image corresponding to a dilated pixel tile obtained by performing dilation processing. After pixel tiling is performed on the depth image, to obtain an image corresponding to at least two pixel tiles shown in 601, dilation processing is performed on each pixel tile in the image shown in 601, to obtain an image corresponding to dilated pixel tiles shown in 602, to obtain a depth-of-field parameter corresponding to each dilated pixel tile, and the at least two dilated pixel tiles are classified based on the depth-of-field parameter corresponding to each dilated pixel tile, to obtain a category to which each dilated pixel tile belongs.

The dilation processing is mathematical morphological dilation transformation. By means of dilation processing, an originally detected pixel region of a clear object edge (for example, a pixel region of a person edge) may be dilated and connected into a whole. That is, by means of dilation processing, a pixel region of a clear object edge originally formed by points or lines may be converted into a pixel region formed by planes. That is, clear points or lines are dilated and extended, so that the clear points or lines are connected to each other into a plane region. In this way, it is more helpful to segment a clear part such as a person region from a blurred part in an original image, so as to successfully extract a clear object such as a person region in each image, that is, a region that can be clearly photographed within a current depth-of-field range of a lens.

Operation 103: Determine, for a pixel tile of each category, a pixel region of each pixel tile of the category in the to-be-rendered image based on a location of the pixel tile of the category in the depth image, and perform blurring processing on the pixel region based on a blurring processing manner corresponding to the category, to obtain a blurred image.

During actual implementation, the to-be-rendered image includes the focal region, the foreground region, the background region, and the intersection region of the foreground region and the background region. For the process of performing blurring processing on the pixel region based on the blurring processing manner corresponding to the category to obtain the blurred image, when the pixel tile belongs to different categories, that is, belongs to different regions, the blurring processing manner corresponding to the category is obtained based on the category of the pixel tile corresponding to the pixel region; blurring processing is performed on the pixel region based on the blurring processing manner, to obtain a blurred value of each pixel in the pixel region; and for each pixel region, the blurred image is generated based on the blurred pixel value of each pixel in the pixel region.

When the pixel tile belongs to different categories, that is, belongs to different regions, blurring processing manners of performing blurring processing on the pixel region are different. Therefore, based on the blurring processing manners, processes of obtaining a blurred value of each pixel in the pixel region by performing blurring processing on the pixel region are also different. Next, when the pixel tile belongs to different categories, a process of obtaining a blurred value of each pixel in the pixel region by performing blurring processing on the pixel region based on the blurring processing manner corresponding to the category is described.

In all embodiment of the present disclosure, when the category of the pixel tile indicates that the pixel tile belongs to the focal region, blurring processing is not performed on the pixel region, that is, a pixel value of each pixel in the pixel region is directly determined as a blurred pixel value of the corresponding pixel.

In some other embodiments, when the category of the pixel tile indicates that the pixel tile belongs to the foreground region or the background region, for each pixel of the pixel region, a first sampling region to which the pixel belongs and a region weight of the corresponding pixel are determined, and a blurred pixel value of the pixel in the first sampling region is determined based on the region weight.

During actual implementation, for a process of determining the first sampling region to which the pixel belongs and the region weight of the corresponding pixel, a sampling radius for the pixel is first calculated, that is:

$$R = \frac{COC * A}{K} \qquad \text{Formula (2)}$$

COC is the radius of the circle of confusion, A is the diagram diameter, and K is the image resolution of the to-be-rendered image.

Then, a first sampling region for the pixel is determined according to the sampling radius, and for each sampling point in the first sampling region, a value, a foreground factor, or a background factor of a circle of confusion of the sampling point are obtained, where the foreground factor is configured for indicating a degree of impact on a sampling point in a surrounding sampling region when the pixel is located in the foreground region, and the background factor is configured for indicating a degree of impact on the sampling point in the surrounding sampling region when the pixel is located in the background region. A region weight of the sampling point is determined based on the value of the circle of confusion of the sampling point, the foreground factor, and the background factor of the sampling point, where the region weight includes a foreground weight and a background weight. The foreground weight is configured for indicating a degree of impact of a color value of the pixel, that is, the pixel value on a blurry pixel value when the sampling point is in the foreground region, and the background weight is configured for indicating a degree of impact of the color value of the pixel, that is, the pixel value on the blurry pixel value when the sampling point is in the background region.

Based on this, a process of determining the region weight of the sampling point based on the value of the circle of confusion, the foreground factor, and the background factor of the sampling point may be: obtaining a preset first mapping relationship, the first mapping relationship being configured for indicating a correspondence between the value of the circle of confusion of the sampling point and a weight parameter of the sampling point; determining the weight parameter of the sampling point based on the first mapping relationship and the value of the circle of confusion of the sampling point; multiplying the value of the weight parameter of the sampling point and the foreground factor of the sampling point when the sampling point is in the foreground region, to obtain the region weight of the sampling point, that is, the foreground weight; and multiplying the value of the weight parameter of the sampling point and the background factor of the sampling point when the sampling point is in the background region, to obtain the region weight of the sampling point, that is, the background weight.

Finally, for the process of determining the blurred pixel value of the pixel based on the region weight, the region in which the pixel is located and each sampling point in the first sampling region of the pixel are determined, and then for each sampling point in the first sampling region of the pixel, the color value of the sampling point and the region weight corresponding to the region in which the sampling point is located are determined, so that the blurred pixel value of the pixel is determined based on the region weight of the sampling point and the color value of the sampling point, that is:

$$FilterdForegroundColor = \frac{\sum_i^S ForegroundWeight_i * Color_i}{\sum_i^S ForegroundWeight_i} \qquad \text{Formula (3)};$$

and

$$FilterdBackgroundColor = \frac{\sum_i^S BackgroundWeight_i * Color_i}{\sum_i^S BackgroundWeight_i} \qquad \text{Formula (4)}$$

S is a quantity of pixels in a surrounding sampling region of the pixel, *FilterdForegroundColor* is configured for indicating a blurred pixel value when a region in which the pixel is located is the foreground region, *FilterdBackgroundColor* is configured for indicating a blurred pixel value when the region in which the pixel is located is the background region, *ForegroundWeight$_i$* is configured for indicating a foreground weight of an ith pixel in the surrounding sampling region of the pixel, *BackgroundWeight$_i$* is configured for indicating a background weight of the ith pixel in the surrounding sampling region of the pixel, and *Color$_i$* is configured for indicating a color value of the ith pixel in the surrounding sampling region of the pixel.

Because the sampling region includes the pixel, the sampling point herein may also include the pixel. This is not limited in this embodiment of the present disclosure.

In all embodiment of the present disclosure, when the category of the pixel tile indicates that the pixel tile belongs to the intersection region, for each pixel of the pixel region, a second sampling region corresponding to the pixel and a region weight of each sampling point in the second sampling region are preferably determined, and a blurred pixel value of the pixel is preferably determined based on the region weight.

When the category of the pixel tile indicates that the pixel tile belongs to the intersection region, the process of determining, for each pixel of the pixel region, a second sampling region to which the pixel belongs and a region weight of each sampling point in the second sampling region, and determining a blurred pixel value of the pixel based on the region weight is similar to the foregoing process of determining, for each pixel of the pixel region, a first sampling region corresponding to the pixel and a region weight of each sampling point in the first sampling region, and determining a blurred pixel value of the pixel based on the region weight when the category of the pixel tile indicates that the pixel tile belongs to the foreground region or the background region. However, a quantity of pixels included in the first sampling region is different from a quantity of pixels included in the second sampling region, and the quantity of pixels included in the second sampling region is greater than the quantity of pixels included in the first sampling region.

For example, referring to FIG. 7, FIG. 7 is a schematic diagram of performing blurring processing on a pixel region based on different blurring processing manners according to an embodiment of the present disclosure. Based on FIG. 7, 701 shows an image obtained when blurring processing is performed on the corresponding pixel region when the category of the pixel tile indicates that the pixel tile belongs to the focal region, 702 shows an image obtained when blurring processing is performed on the corresponding pixel region when the category of the pixel tile indicates that the pixel tile belongs to the focal region and when the category of the pixel tile indicates that the pixel tile belongs to the foreground region or the background region, and 703 shows an image obtained when blurring processing is performed on the corresponding pixel region when the category of the pixel tile indicates that the pixel tile belongs to the focal region, the category of the pixel tile indicates that the pixel tile belongs to the foreground region or the background region, and the category of the pixel tile indicates that the pixel tile belongs to the intersection region. Herein, after blurring processing is performed on the corresponding pixel region when the category of the pixel tile indicates that the pixel tile belongs to the focal region to obtain the image shown in 701, based on the image shown in 701, corresponding blurring processing is performed on a pixel region corresponding to a pixel tile belonging to the foreground region or the background region to obtain the image shown in 702, and then based on the image shown in 702, corresponding blurring processing is performed on a pixel region corresponding to the pixel tile belonging to the intersection region, to obtain the image shown in 703, that is, a blurred image.

In all embodiment of the present disclosure, in addition to generating the blurred image based on the blurred pixel value of each pixel in the pixel region, a transition coefficient from the foreground region to the background region may be generated, to generate a region transition image corresponding to the to-be-rendered image based on the transition coefficient. Herein, the region transition image is configured for indicating a mixing degree of the foreground region and the background region in the to-be-rendered image. The transition coefficient includes a first transition coefficient, a second transition coefficient, and a third transition coefficient. The first transition coefficient is obtained when the category of the pixel tile indicates that the pixel tile belongs to the focal region; the second transition coefficient is obtained when the category of the pixel tile indicates that the pixel tile belongs to the foreground region or the background region; the third transition coefficient is obtained when the category of the pixel tile indicates that the pixel tile belongs to the intersection region; and the region transition image corresponding to the to-be-rendered image is generated based on the first transition coefficient, the second transition coefficient, and the third transition coefficient.

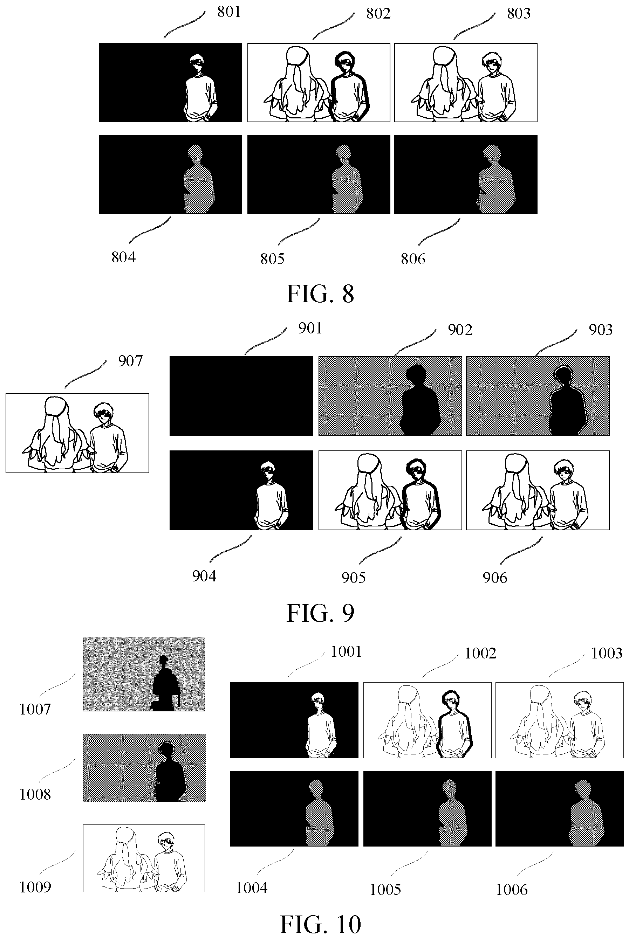

For example, referring to FIG. 8, FIG. 8 is a schematic diagram corresponding to a blurred image and a region transition image according to an embodiment of the present disclosure. Based on FIG. 8, 801 shows an image obtained when blurring processing is performed on a corresponding pixel region when a category of a pixel tile indicates that the pixel tile belongs to the focal region, 802 shows an image obtained when blurring processing is performed on the corresponding pixel region when the category of the pixel tile indicates that the pixel tile belongs to the focal region and when the category of the pixel tile indicates that the pixel tile belongs to the foreground region or the background region, 803 shows an image, that is, a blurred image, obtained when blurring processing is performed on the corresponding pixel region when the category of the pixel tile indicates that the pixel tile belongs to the focal region, when the category of the pixel tile indicates that the pixel tile belongs to the foreground region or the background region, and when the category of the pixel tile indicates that the pixel tile belongs to the intersection region, 804 shows an image corresponding to the obtained first transition coefficient when the category of the pixel tile indicates that the pixel tile belongs to the focal region, 805 shows an image corresponding to the obtained first transition coefficient and second transition coefficient when the category of the pixel tile indicates that the pixel tile belongs to the focal region and when the category of the pixel tile indicates that the pixel tile belongs to the foreground region or the background region, and 806 shows an image corresponding to the obtained first transition coefficient, second transition coefficient, and third transition coefficient, that is, a region transition image, obtained when the category of the pixel tile indicates that the pixel tile belongs to the focal region, when the category of the pixel tile indicates that the pixel tile belongs to the foreground region or the background region, and when the category of the pixel tile indicates that the pixel tile belongs to the intersection region. Herein, when the category of the pixel tile indicates that the pixel tile belongs to the focal region, the region transition image corresponding to the first transition coefficient shown in FIG. 804 is obtained, the second transition coefficient is obtained based on the pixel tile that belongs to the foreground region or the background region, the image shown in FIG. 805 is determined based on the second transition coefficient and the first transition coefficient, finally, the third transition coefficient is obtained based on the pixel tile that belongs to the intersection region, and the image shown in FIG. 806, that is, the region transition image, is determined based on the first transition coefficient, the second transition coefficient, and the third transition coefficient.

In all embodiment of the present disclosure, after the pixel region of the pixel tile in the to-be-rendered image is determined based on the location of each pixel tile in the category in the depth image, pre-blurring processing may be performed on the pixel region, to obtain a pre-blurred image, and then blurring processing is performed on the pre-blurred image, to obtain the blurred image. The process of performing pre-blurring processing on the pixel region to obtain a pre-blurred image may be: obtaining, based on the category of the pixel tile corresponding to the pixel region, a pre-blurring processing manner corresponding to the category; performing pre-blurring processing on the pixel region based on the pre-blurring processing manner, to obtain a pre-blurred value of each pixel in the pixel region, and generating a pre-blurred image based on the pre-blurred value; and Then, a pre-blurred region corresponding to the pixel region in the pre-blurred image is determined based on the location of the pixel region in the to-be-rendered image, so that the process of performing blurring processing on the pixel region based on the blurring processing manner corresponding to the category to obtain the blurred image may be performing blurring processing on the pre-blurred region corresponding to the pixel region based on the blurring processing manner corresponding to the category to obtain the blurred image.

There are a plurality of categories of pixel tiles corresponding to the pixel region. When the pixel tile belongs to different categories, that is, belongs to different regions, obtained pre-blurring processing manners corresponding to the categories are also different. Therefore, based on the pre-blurring processing manners, processes of performing pre-blurring processing on the pixel region to obtain a pre-blurred value of each pixel in the pixel region are also different. Next, when the pixel tile corresponding to the pixel region belongs to different categories, a process of performing pre-blurring processing on the pixel region based on the obtained pre-blurring processing manners corresponding to the categories, to obtain a pre-blurred value of each pixel in the pixel region is described.

In all embodiment of the present disclosure, when the category of the pixel tile indicates that the pixel tile belongs to the focal region, pre-blurring processing is preferably not performed on the pixel region, that is, a pixel value of each pixel in the pixel region is directly determined as a pre-blurred pixel value of the corresponding pixel.

In some other embodiments, when the category of the pixel tile indicates that the pixel tile belongs to the foreground region or the background region, for each pixel of the pixel region, a first sampling region corresponding to the pixel and a plurality of sampling points corresponding to the pixel in the first sampling region are determined; and a depth difference between each sampling point and the pixel is respectively obtained, and a pre-blurred pixel value of the pixel is determined based on the depth difference.

During actual implementation, for a process of determining the first sampling region corresponding to the pixel and the plurality of sampling points corresponding to the pixel in the first sampling region, first a sampling radius of the pixel is calculated as shown in formula (2), then the first sampling region corresponding to the pixel is determined according to the sampling radius, and the plurality of sampling points corresponding to the pixel in the first sampling region are determined. Then, a process of respectively obtaining a depth difference between each sampling point and the pixel, so as to determine a pre-blurred pixel value of the pixel in the first sampling region based on the depth difference may be: for each sampling point, obtaining a first color value of the pixel and a first weight of the corresponding pixel and a second color value of the sampling point and a second weight of the corresponding sampling point based on the depth difference, so as to perform weighted summation based on the first color value, the first weight, the second color value, and the second weight, to obtain a weighted color value of the sampling point. Herein, a sum of the first weight and the second weight is 1. Then, the weighted color values of the sampling points are accumulatively summed, to obtain the sum of the weighted color values. A ratio of the sum of the weighted color values to a quantity of the plurality of sampling points in the first sampling region is obtained, to obtain a target color value of the pixel, and the target color value is used as a pre-blurred pixel value corresponding to the pixel.

If the depth of the sampling point is close to the depth of the current pixel (that is, the pixel), the color weight of the sampling point is large; otherwise, the color weight is small. For the obtained depth difference between each sampling point and the pixel, for each sampling point, when the depth difference is large, the color weight of the sampling point is small, and when the depth difference is small, the color weight of the sampling point is large. In addition, a sum of the color weight of the sampling point and the color weight of the current pixel is 1. Therefore, based on the depth difference, the first weight corresponding to the pixel, that is, the color weight corresponding to the pixel, and the second weight corresponding to the sampling point, that is, the color weight corresponding to the sampling point are obtained.

Different from the foregoing process of determining a blurred pixel value, the sampling point herein cannot include the pixel. In addition, there is a preset second mapping relationship corresponding to each pixel. The second mapping relationship is configured for indicating a correspondence between the depth difference between the sampling point corresponding to the pixel and the pixel and the color weight of the sampling point. Therefore, for each sampling point, the process of obtaining the first color value of the pixel and the first weight of the corresponding pixel and the second color value of the sampling point and the second weight of the corresponding sampling point based on the depth difference may be: obtaining the preset second mapping relationship, and for each sampling point, determining the second weight corresponding to the sampling point based on the depth difference and the second mapping relationship; and taking a difference between the target parameter, that is, 1, and the second weight, to obtain the first weight of the pixel.

In some other embodiments, when the category of the pixel tile indicates that the pixel tile belongs to the intersection region, for each pixel of the pixel region, a second sampling region corresponding to the pixel and a plurality of sampling points in the second sampling region corresponding to the pixel are determined; and a depth difference between each sampling point and the pixel is obtained, and a pre-blurred pixel value of the pixel is determined based on the depth difference.

The process in which when the category of the pixel tile indicates that the pixel tile belongs to the intersection region, for each pixel of the pixel region, a second sampling region to which the pixel belongs and a plurality of sampling points in the second sampling region corresponding to the pixel are determined, then a depth difference between each sampling point and the pixel is obtained, and a pre-blurred pixel value of the pixel is determined based on the depth difference is similar to the foregoing process in which when the category of the pixel tile indicates that the pixel tile belongs to the foreground region or the background region, for each pixel of the pixel region, a first sampling region to which the pixel belongs and a plurality of sampling points in the first sampling region corresponding to the pixel are determined, then a depth difference between each sampling point and the pixel is obtained, and a pre-blurred pixel value of the pixel is determined based on the depth difference. However, a quantity of pixels included in the first sampling region is different from a quantity of pixels included in the second sampling region, and the quantity of pixels included in the second sampling region is greater than the quantity of pixels included in the first sampling region.

In all embodiment of the present disclosure, in addition to performing pre-blurring processing on the pixel region to obtain a pre-blurred image, a region partition image corresponding to the to-be-rendered image may further be generated. This may be: determining a focal region in the to-be-rendered image when the category of the pixel tile indicates that the pixel tile belongs to the focal region; determining the foreground region and the background region in the to-be-rendered image when the category of the pixel tile indicates that the pixel tile belongs to the foreground region or the background region; and determining the intersection region of the foreground region and the background region in the to-be-rendered image when the category of the pixel tile indicates that the pixel tile belongs to the intersection region, thereby generating the region partition image corresponding to the to-be-rendered image based on the focal region, the foreground region, the background region, and the intersection region. Therefore, in a subsequent process, based on the region partition image and the blurring processing manner corresponding to the category corresponding to each region in the region partition image, blurring processing is performed on the corresponding pixel region in the pre-blurred image, to obtain the blurred image.

For example, referring to FIG. 9, FIG. 9 is a schematic diagram of a region partition image and a pre-blurred image according to an embodiment of the present disclosure. Based on FIG. 9, 907 shows the to-be-rendered image, 904 shows an image obtained when pre-blurring processing is performed on the corresponding pixel region when the category of the pixel tile indicates that the pixel tile belongs to the focal region, 905 shows an image obtained when pre-blurring processing is performed on the corresponding pixel region when the category of the pixel tile indicates that the pixel tile belongs to the focal region and when the category of the pixel tile indicates that the pixel tile belongs to the foreground region or the background region, 906 shows an image obtained when pre-blurring processing is performed on the corresponding pixel region when the category of the pixel tile indicates that the pixel tile belongs to the focal region, the category of the pixel tile indicates that the pixel tile belongs to the foreground region or the background region, and the category of the pixel tile indicates that the pixel tile belongs to the intersection region, 901 shows an image including the focal region that is determined when the category of the pixel tile indicates that the pixel tile belongs to the focal region, 902 shows an image including the focal region, the foreground region, and the background region that is determined when the category of the pixel tile indicates that the pixel tile belongs to the focal region, and the category of the pixel tile indicates that the pixel tile belongs to the foreground region or the background region, and 903 shows an image including the focal region, the foreground region, the background region, and the intersection region that is determined when the category of the pixel tile indicates that the pixel tile belongs to the focal region, when the category of the pixel tile indicates that the pixel tile belongs to the foreground region or the background region, and when the category of the pixel tile indicates that the pixel tile belongs to the intersection region. Herein, when the category of the pixel tile indicates that the pixel tile belongs to the focal region, pre-blurring processing is performed on the corresponding pixel region in the to-be-rendered image to obtain the image shown in 904, and after the image including the focal region shown in 901 is obtained, based on the image shown in 904, corresponding pre-blurring processing is performed on the pixel region corresponding to the pixel tile belonging to the foreground region or the background region, to obtain the image shown in 905. Based on the pixel tile belonging to the foreground region or the background region and the image shown in 901, the image shown in 902 including the focal region, the foreground region, and the background region is determined, and then, based on the image shown in 905, corresponding pre-blurring processing is performed on the pixel region corresponding to the pixel tile belonging to the intersection region, to obtain the image shown in 906, that is, the pre-blurred image, and based on the pixel tile belonging to the intersection region and the image shown in 902, the image shown in 903 including the focal region, the foreground region, the background region, and the intersection region is determined, that is, the region partition image.

In all embodiment of the present disclosure, after dilation processing is performed on each pixel tile, to obtain a dilated pixel tile, and at least two dilated pixel tiles are preferably classified based on a depth-of-field parameter corresponding to each dilated pixel tile, to obtain a category to which each dilated pixel tile belongs, a pre-blurring processing manner corresponding to the category may further be obtained based on the category of the dilated pixel tile corresponding to the pixel region; pre-blurring processing is performed on the pixel region based on the pre-blurring processing manner, to obtain a pre-blurred value of each pixel in the pixel region; a pre-blurred image is generated based on the pre-blurred value, so that the process of performing blurring processing on the corresponding pixel region in the pre-blurred image based on the region partition image and the blurring processing manner corresponding to the category of the pixel tile included in each region, to obtain the blurred image may be: obtaining the region partition image corresponding to the to-be-rendered image; and then, obtaining the blurring processing manner corresponding to the category based on the category of the dilated pixel tile corresponding to the pixel region; further, performing blurring processing on the corresponding pixel region in the pre-blurred image based on the region partition image and the blurring processing manner corresponding to the category corresponding to each region in the region partition image, to obtain a blurred image; and obtaining a region transition image corresponding to the to-be-rendered image, so that in a subsequent process, the depth-of-field image corresponding to the to-be-rendered image is obtained based on the region transition image and the blurred image.

For example, referring to FIG. 10, FIG. 10 is a schematic diagram of a pre-blurred image and a region transition image according to an embodiment of the present disclosure. Based on FIG. 10, 1001 shows an image obtained when blurring processing is performed on a corresponding pixel region in the pre-blurred image when a category of a dilated pixel tile indicates that the dilated pixel tile belongs to the focal region, 1002 shows an image obtained when blurring processing is performed on the corresponding pixel region in the pre-blurred image when the category of the dilated pixel tile indicates that the dilated pixel tile belongs to the focal region and when the category of the dilated pixel tile indicates that the dilated pixel tile belongs to the foreground region or the background region, and 1003 shows an image obtained when blurring processing is performed on the corresponding pixel region in the pre-blurred image, that is, the blurred image, when the category of the dilated pixel tile indicates that the dilated pixel tile belongs to the focal region, the category of the dilated pixel tile indicates that the dilated pixel tile belongs to the foreground region or the background region, and the category of the dilated pixel tile indicates that the dilated pixel tile belongs to the intersection region. 1004 shows an image corresponding to the first transition coefficient that is obtained when the category of the dilated pixel tile indicates that the dilated pixel tile belongs to the focal region, 1005 shows an image corresponding to the first transition coefficient and the second transition coefficient that are obtained when the category of the dilated pixel tile indicates that the dilated pixel tile belongs to the focal region, and the category of the dilated pixel tile indicates that the dilated pixel tile belongs to the foreground region or the background region, and 1006 shows an image corresponding to the first transition coefficient, the second transition coefficient, and the third transition coefficient, that is, a region transition image, obtained when the category of the dilated pixel tile indicates that the dilated pixel tile belongs to the focal region, when the category of the dilated pixel tile indicates that the dilated pixel tile belongs to the foreground region or the background region, and when the category of the dilated pixel tile indicates that the dilated pixel tile belongs to the intersection region. 1007 shows an image corresponding to the dilated pixel tile obtained by performing dilation processing, 1008 shows a region partition image, and 1009 shows a pre-blurred image, so that the blurred image shown in 1003 and the region transition image shown in 1006 are determined based on the region partition image shown in 1008, the pre-blurred image shown in 1009, and the image corresponding to the dilated pixel tile obtained by performing dilation processing shown in 1007.

Operation 104: Obtain a depth-of-field image corresponding to the to-be-rendered image based on the to-be-rendered image and the blurred image.

During actual implementation, a process of performing image rendering based on the to-be-rendered image and the blurred image, to obtain the depth-of-field image corresponding to the to-be-rendered image may be: performing up-sampling processing on the blurred image, to obtain an up-sampled blurred image; performing image fusion on the to-be-rendered image and the up-sampled blurred image to obtain a fused image; and performing image rendering on the fused image to obtain the depth-of-field image corresponding to the to-be-rendered image.

In all embodiment of the present disclosure, the depth-of-field image corresponding to the to-be-rendered image may be further obtained based on the region transition image and the blurred image. Herein, image rendering is first performed on the to-be-rendered image and the blurred image based on the region transition image and the depth image of the to-be-rendered image, to obtain the depth-of-field image corresponding to the to-be-rendered image. The region transition image corresponding to the to-be-rendered image is obtained, and the region transition image is configured for indicating a mixing degree of the foreground region and the background region in the to-be-rendered image; up-sampling processing is performed on the region transition image, to obtain an up-sampled region transition image; and therefore, the process of performing image rendering based on the to-be-rendered image and the blurred image, to obtain the depth-of-field image corresponding to the to-be-rendered image may be: performing up-sampling processing on the blurred image, to obtain an up-sampled blurred image; performing image fusion on the to-be-rendered image and the up-sampled blurred image based on the depth image and the up-sampled region transition image, to obtain a fused image; and performing image rendering on the fused image to obtain the depth-of-field image corresponding to the to-be-rendered image.

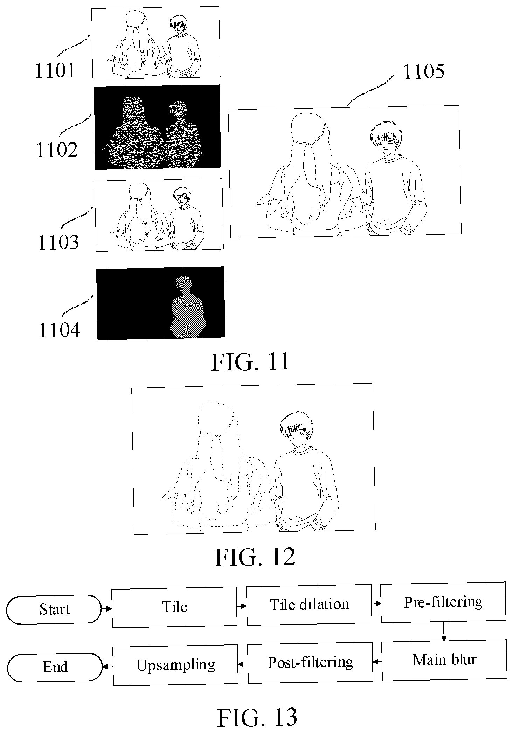

For example, referring to FIG. 11, FIG. 11 is a schematic diagram of performing image rendering based on a to-be-rendered image and a blurred image to obtain a depth-of-field image corresponding to the to-be-rendered image according to an embodiment of the present disclosure. Based on FIG. 11, 1101 shows the to-be-rendered image, 1102 shows the depth image corresponding to the to-be-rendered image, 1103 shows the blurred image, 1104 shows the region transition image, and 1105 shows the depth-of-field image corresponding to the to-be-rendered image. Herein, up-sampling processing is performed on the region transition image shown in 1104, to obtain an up-sampled region transition image, and then, up-sampling processing is performed on the blurred image shown in 1103, to obtain an up-sampled blurred image. Therefore, based on the depth image and the up-sampled region transition image as shown in 1102, image fusion is performed on the to-be-rendered image and the up-sampled blurred image as shown in 1101, to obtain a fused image. Image rendering is performed on the fused image to obtain the depth-of-field image corresponding to the to-be-rendered image shown in 1105.

In all embodiment of the present disclosure, the blurred image preferably includes a plurality of image tiles, so that after blurring processing is performed on the pixel region based on the blurring processing manner corresponding to the category, to obtain the blurred image, the following processing may further be performed on each pixel in the blurred image: determining an image tile to which the pixel belongs; selecting an intermediate value from pixel values of a plurality of pixels included in the image tile, and determining the intermediate value as a target pixel value of the pixel; and generating a target blurred image based on the target pixel value of each pixel in the blurred image. Therefore, the process of obtaining the depth-of-field image corresponding to the to-be-rendered image based on the to-be-rendered image and the blurred image may be: obtaining the depth-of-field image corresponding to the to-be-rendered image based on the to-be-rendered image and the target blurred image.

By applying the foregoing embodiment, for each pixel in a blurred image, an image tile to which the pixel belongs is determined, and an intermediate value is selected from pixel values of a plurality of pixels included in the image tile, so that the intermediate value is determined as a target pixel value of the pixel, to filter the blurred image, thereby effectively removing highlighted noise in a picture.

In all embodiment of the present disclosure, the region transition image preferably includes a plurality of image tiles, so that after blurring processing is performed on the pixel region based on the blurring processing manner corresponding to the category, to obtain the blurred image, the following processing may further be performed on each pixel in the region transition image: determining an image tile to which the pixel belongs; selecting an intermediate value from pixel values of a plurality of pixels included in the image tile, and determining the intermediate value as a target pixel value of the pixel; and generating a target region transition image based on the target pixel value of each pixel in the region transition image. Therefore, the process of processing the to-be-rendered image and the target blurred image based on the region transition image and the depth image, to obtain the depth-of-field image corresponding to the to-be-rendered image may be: processing the to-be-rendered image and the target blurred image based on the target region transition image and the depth image, to obtain the depth-of-field image corresponding to the to-be-rendered image.

During actual application, for each pixel in a region transition image, an image tile to which the pixel belongs is determined, and an intermediate value is selected from pixel values of a plurality of pixels included in the image tile, so that the intermediate value is determined as a target pixel value of the pixel to filter the region transition image, thereby effectively removing highlighted noise in a picture.

The sizes of image tiles in the blurred image and the region transition image are preset. For example, the image tile may be a pixel region including 9*9 pixels. The process of obtaining the depth-of-field image corresponding to the to-be-rendered image based on the to-be-rendered image and the target blurred image is similar to the foregoing process of obtaining the depth-of-field image corresponding to the to-be-rendered image based on the to-be-rendered image and the blurred image. In addition, the process of performing image rendering on the to-be-rendered image and the target blurred image based on the target region transition image and the depth image, to obtain the depth-of-field image corresponding to the to-be-rendered image is similar to the foregoing process of performing image rendering on the to-be-rendered image and the blurred image based on the region transition image and the depth image, to obtain the depth-of-field image corresponding to the to-be-rendered image. Details are not described in this embodiment of the present disclosure.

By applying the foregoing embodiment of the present disclosure, first, pixel tiling is performed on a depth image of a to-be-rendered image, to obtain at least two pixel tiles; the at least two pixel tiles are classified based on a depth-of-field parameter corresponding to each pixel tile, to obtain a category to which each pixel tile belongs; blurring processing is performed on pixel regions corresponding to the pixel tiles in the to-be-rendered image according to different categories to which the pixel tiles belong and according to blurring processing manners corresponding to the categories, to obtain a blurred image; and finally, a depth-of-field image corresponding to the to-be-rendered image is obtained based on the to-be-rendered image and the blurred image. In this way, the pixel tiles are classified according to rendering parameters corresponding to different pixel tiles in a rendering process and complexity of the rendering process, so that for pixel tiles of different categories, rendering processes corresponding to the categories are performed, to obtain a final depth-of-field image. In this way, not only a rendering effect when the depth-of-field image is rendered is improved, but also the rendering processes when the depth-of-field image is rendered are reduced, thereby reducing performance consumption, and improving efficiency during image processing.

The following describes an exemplary application of the embodiments of the present disclosure in an actual application scenario.

The inventor finds that for a rendering process of a depth-of-field image, that is, a rendering process of a depth-of-field of an image, the related technology such as UE4 provides two depth-of-field implementations on a mobile platform, that is, FastBlur DoF and Gaussian DoF. The two implementations are roughly the same. A basic principle is that a depth-of-field effect is achieved by specifying parameters such as a focal region, a foreground transition region (Near Transition), a background transition region (Far Transition), and a camera focal distance. In addition to the foregoing two depth-of-field implementations on a mobile end, UE4 provides a relatively complex depth-of-field implementation on a PC end, that is, Diagram DoF, whose performance is close to a result of actual optical simulation. However, compared with using a camera in real life, a user can freely control a blurring degree of a depth-of-field only by controlling a diagram size, a camera focal distance, and a focus distance. The two depth-of-fields on mobile ends of UE4 bring many non-physical parameters. Each time the user focuses a picture, the user needs to repeatedly adjust parameters such as a transition region and a transition blurring degree. Consequently, a blur effect is very undesirable. In addition, in a relatively high-quality Gaussian DoF on a mobile end, a foreground and a background are split to perform Gaussian blur, and then superimposed with an original clear image. In a region having a relatively large COC change (for example, a boundary between a focus place and a background), a blur effect of a depth-of-field image is reduced.

For the diagram DoF, which is a manner of rendering the depth-of-field image based on a purely physical geometrical optical formula, a user can achieve a near-perfect depth-of-field effect by adjusting three parameters: a diagram size, a camera focal distance, and a focus distance. However, even for a diagram DoF with the lowest quality, a quantity of pass required reaches an amazing quantity of 17. Bandwidth consumption and time consumption that are caused cannot be borne by a mobile end. The bandwidth consumption directly affects heat generation of a mobile phone, and the time consumption affects a frame rate of a game. In addition, for the diagram DoF manner, when an if operation is performed in a shader, if the if operation has a dynamic variable inside, it depends on whether all threads in the warp pass or do not pass the if branch; otherwise, an operation such as null operation on the thread is generated. If the shader is excessively complex, problems such as register overflow may also be caused. These operations cause an increase in time consumption of rendering.

Based on this, an embodiment of the present disclosure provides a post-processing depth-of-field implementation method based on tiling rendering. Compared with the related art in which originally an if branch is executed in a shader to implement a depth-of-field rendering process, by using the technical solution of this embodiment of the present disclosure, depth-of-field rendering may be simply represented by a circle of confusion (COC), and different operations are performed on pixels of different COCs. A pixel region with a relatively small COC may be considered as a focal region (Early Exit), and a currently clear pixel is directly returned. Because the Shader has a relatively small calculation amount, a pixel region having a relatively large COC but a relatively small change may be considered as a cheap region. A region having a relatively large COC and a relatively large change may be considered as an expensive region. In this way, by using the foregoing classification method, an input pixel may be tiled in advance, and then it is only necessary to perform different shader calls on different pixel tiles, so as to perform a series of operations including pre-filtering processing, main filtering processing, post-filtering processing, and up-sampling. In this way, performing an if operation in an extremely complex shader can be effectively avoided, thereby not only improving a rendering effect when a depth-of-field image is rendered, but also reducing rendering processes when the depth-of-field image is rendered, reducing performance consumption, and improving efficiency when the image is processed.

Referring to FIG. 12, FIG. 12 is a schematic diagram of an effect of post-processing depth-of-field rendering based on tiling rendering according to an embodiment of the present disclosure. Based on FIG. 12, the post-processing depth-of-field effect based on tiling rendering of the present disclosure is shown in FIG. 12, and it may be determined that the effect shown in FIG. 12 is very close to the effect of the Diagram DoF provided by UE4 on the PC end in the related technology, but bandwidth and time consumption are greatly reduced.

Next, the post-processing depth-of-field rendering solution based on tiling rendering provided in the embodiment of the present disclosure is described from a technical side. Referring to FIG. 13, FIG. 13 is a technical architectural diagram of post-processing depth-of-field rendering based on tiling rendering according to an embodiment of the present disclosure. Based on FIG. 13, a tiling rendering-based post-processing depth-of-field rendering method according to an embodiment of the present disclosure is implemented by using six operations: Tiling Pass, TileDilate Pass, Prefilter Pass, MainFilter Pass, PostFilter Pass, and Upsample Pass.

For the process of tiling (pixel tiling), as shown in FIG. 5, first, a full-resolution depth map is inputted, then a $16 \times 16$ pixel region is used as a tile (pixel tile), and a render target configured for indicating a minimum depth (TileMinDepth), a maximum COC (TileMaxCOC), and a minimum COC (TileMinCOC) of a pixel in the tile is outputted.

For the process of tile dilation (dilation processing), as shown in FIG. 6, dilation processing is performed on an output render target of Tiling Pass. Herein, a pixel region (for example, pixels at an edge around a person) having a relatively significant COC change can be more effectively processed only after dilation processing is performed, and a render target (a dilated pixel tile) after dilation processing is recorded as NeighborTileMinDepthMaxCOC. In addition, in the process of tile dilation, each tile is further classified, that is, EarlyExitQueue (first category), CheapQueue (second category), and ExpensiveQueue (third category). A maximum radius MaxCOC (a maximum value of the circle of confusion) and a minimum radius MinCOC (a minimum value of the circle of confusion) of the circle of confusion corresponding to each pixel tile are determined. If MaxCOC is less than 1, it is considered that the tile is in a focal region, and the tile is classified as EarlyExitQueue. If MaxCOC-If MinCOC < 1, it is considered that the tile is in a region having a little COC change, and therefore the tile is classified as CheapQueue. For a tile in another case, the corresponding Tile is classified as an ExpensiveQueue.

In this process, the first 12 bytes may be further outputted to record a quantity of different categories of tiles, and the last 36 bytes are used as a result of indirect dispatch as indirect buffer, so that a task scheduling module records, based on the result, a quantity of subsequent groups to undergo indirect dispatch of each category of tiles.

For the process of pre-filtering (pre-blurring processing), as shown in FIG. 9, first, different regions, such as the foreground region, the background region, the focal region, and the intersection region of the foreground region and the background region, in the to-be-rendered image need to be distinguished, and then pre-filtering processing is performed. Herein, if pre-filtering is not performed, subsequent MainFilter Pass directly samples the original image (the to-be-rendered image). Because the sampling is performed in a ring manner and a quantity of sampling times is limited, an undersampling problem is caused, thereby reducing an effect of blurring processing.

During actual implementation, the process of pre-filtering mainly outputs two render targets, which are respectively denoted as Presort (region partition image) and Prefilter (pre-blurred image), and resolutions of the two render targets are both half of that of the input image (the to-be-rendered image). Presort stores three values, which are respectively a COC, a background factor, and a foreground factor of a current pixel, and Prefilter stores a half-resolution image obtained after filtering. Herein, Presort and Prefilter are obtained by successively performing three times of Indirect Dispatch. The three times of Indirect Dispatch may be executed in sequence, or may be executed in parallel, so as to reduce rendering time. This is not limited in this embodiment of the present disclosure.

Next, a process of executing the three times of Indirect Dispatch is described. When the pixel tile is in EarlyExitQueue (when the pixel tile is in the focal region), a current pixel is directly returned (a pixel value of the current pixel is used as a pre-blurred pixel value). When the pixel tile is in CheapQueue (when the pixel tile is in the background region or the foreground region), a sampling radius is first calculated, then points surrounding the current pixel are sampled based on the sampling radius, and color accumulation is performed. Herein, a policy of color accumulation is as follows: If a depth of a sampling point is close to a depth of the current point (the current pixel), a weight of the sampling point is large; otherwise, the weight is small. Based on a depth difference, a first color value of the current point and a first weight corresponding to the current point, and a second color value of the sampling point and a second weight corresponding to the sampling point are obtained, so that weighted summation is performed based on the first color value, the first weight, the second color value, and the second weight, to obtain a weighted color value of the sampling point, where a sum of the first weight and the second weight is 1. Then, weighted color values of the sampling points are accumulatively summed to obtain a weighted color value sum; and a ratio of the weighted color value sum to a quantity of sampling points is obtained, to obtain a pre-blurred pixel value corresponding to the current point. When the pixel tile is in ExpensiveQueue (when the pixel tile is in the intersection region of the background region and the foreground region), a process of determining a pre-blurred pixel value of a current point is the same as the foregoing process of determining a pre-blurred pixel value of a current point when the pixel tile is in CheapQueue, but sampling radii determined in the two processes are different. Therefore, quantities of sampling points are also different. A quantity of sampling points corresponding to the pixel tile in ExpensiveQueue is greater than a quantity of sampling points corresponding to the pixel tile in CheapQueue.

For a main blur (blurring processing) process, as shown in FIG. 10, the process uses NeighborTileMinDepth-MaxCOC, Prefilter, and Presort as inputs, and the pass performs a real blur operation. Mainfilter Pass also calls Indirect Dispatch for three times, and different ring sampling operations are performed on different categories of tiles. For example, when a pixel tile is located in EarlyExitQueue, a current pixel is directly returned, and when a pixel tile is located in CheapQueue and ExpensiveQueue, different ring sampling policies are executed according to MaxCOC. A maximum quantity of sampling times is performed when a pixel tile is located in ExpensiveQueue. During ring sampling, an accumulated value of a background color and a foreground color are calculated according to the foreground factor and the background factor in presort.

Next, a process of executing the three times of Indirect Dispatch is described. When the pixel tile is in EarlyExitQueue (when the pixel tile is in the focal region), a current pixel is directly returned (a pre-blurred pixel value of the current pixel is used as a blurred pixel value). When the pixel tile is in CheapQueue (when the pixel tile is in the background region or the foreground region), first, a COC, a background factor, and a foreground factor of a current pixel in presort are obtained; then, a background weight and a foreground weight of the current point are obtained based on the COC, the background factor, and the foreground factor of the current point; then, a sampling radius of the current point is calculated; and a sampling region corresponding to the current point is determined based on the sampling radius, so that a color value (a blurred value) of the current point is determined based on the sampling region and whether a region corresponding to the current point is the foreground region or the background region by using formula (3) and formula (4). When the pixel tile is in ExpensiveQueue (when the pixel tile is in the intersection region of the background region and the foreground region), a process of determining a blurred pixel value of a current point is the same as the foregoing process of determining a blurred pixel value of a current point when the pixel tile is in CheapQueue, but sampling radii determined in the two processes are different. Therefore, quantities of sampling points are also different. A quantity of sampling points corresponding to the pixel tile in ExpensiveQueue is greater than a quantity of sampling points corresponding to the pixel tile in CheapQueue.

For the process of post-filtering, median filtering needs to be performed for denoising after MainFilter Pass. By sampling two textures: MainFilter (blurred image) and Alpha (region transition image), median filtering is implemented on $9\times9$ pixels around each pixel, so that highlighted noise in a picture can be effectively removed.

For the process of up-sampling, as shown in FIG. 11, in the process, full-resolution SceneColor (to-be-rendered image) and SceneDepth (depth image), and half-resolution PostFilter (target blurred image) and PostFilterAlpha (target region partition image) are used as inputs, so that SceneColor and PostFilter are fused based on SceneDepth and PostFilterAlpha, and a depth-of-field image whose effect is similar to that of diagram DoF is finally outputted.

Different rendering grading configurations may also be set, where Tiling Pass, Tile Dilate Pass, MainFilter Pass, and Upsample Pass are Passes that need to be performed, that is, a depth-of-field image having the lowest image quality is outputted by performing the four processes of Tiling Pass, Tile Dilate Pass, MainFilter Pass, and Upsample Pass. Alternatively, a depth-of-field image having intermediate image quality is outputted by performing five processes of Tiling Pass, Tile Dilate Pass, Prefilter Pass, MainFilter Pass, and Upsample Pass. Alternatively, a depth-of-field image having the highest image quality is outputted by performing six processes of Tiling Pass, Tile Dilate Pass, Prefilter Pass, MainFilter Pass, PostFilter Pass, and Upsample Pass.

In this way, in the present disclosure, an effect of approximating that of diaphragm DoF by UE4 on a PC end is achieved by using fewer rendering times and fewer bandwidth, and it is ensured that a high-quality depth-of-field on a mobile end can be provided. In addition, in the present disclosure, a test is also performed on a mobile device. Parameters such as a diagram and a focal distance are adjusted. Different parameters cause different blur policies and shader complexity, and the effect of greatly reducing bandwidth and time consumption can also be achieved.

By applying the foregoing embodiment of the present disclosure, first, pixel tiling is performed on a depth image of a to-be-rendered image, to obtain at least two pixel tiles; the at least two pixel tiles are classified based on a depth-of-field parameter corresponding to each pixel tile, to obtain a category to which each pixel tile belongs; blurring processing is performed on pixel regions corresponding to the pixel tiles in the to-be-rendered image according to different categories to which the pixel tiles belong and according to blurring processing manners corresponding to the categories, to obtain a blurred image; and finally, a depth-of-field image corresponding to the to-be-rendered image is obtained based on the to-be-rendered image and the blurred image. In this way, the pixel tiles are classified according to rendering parameters corresponding to different pixel tiles in a rendering process and complexity of the rendering process, so that for pixel tiles of different categories, rendering processes corresponding to the categories are performed, to obtain a final depth-of-field image. In this way, not only a rendering effect when the depth-of-field image is rendered is improved, but also the rendering processes when the depth-of-field image is rendered are reduced, thereby reducing performance consumption, and improving efficiency during image processing.

The following continues to describe an example structure when a device 455 for rendering a depth-of-field image provided in the embodiment of the present disclosure is implemented as software modules. In some embodiments, as shown in FIG. 2, the software modules of the device 455 for rendering a depth-of-field image stored in a memory 450 may include:

a first obtaining module 4551, configured to: obtain a depth image of a to-be-rendered image, and perform pixel tiling on the depth image, to obtain at least two pixel tiles;

a second obtaining module 4552, configured to: obtain a depth-of-field parameter of each pixel tile, and classify the at least two pixel tiles based on the depth-of-field parameter, to obtain a category to which each pixel tile belongs;

a blurring processing module 4553, configured to: determine, for a pixel tile of each category, a pixel region of each pixel tile of the category in the to-be-rendered image based on a location of the pixel tile of the category in the depth image, and perform blurring processing on the pixel region based on a blurring processing manner corresponding to the category, to obtain a blurred image; and

a rendering module 4554, configured to obtain a depth-of-field image corresponding to the to-be-rendered image based on the to-be-rendered image and the blurred image.

In the embodiments of the present disclosure including the embodiments of both the claims and the specification (hereinafter referred to as "all embodiments of the present disclosure"), the first obtaining module 4551 is preferably further configured to obtain the to-be-rendered image, and construct a space coordinate system corresponding to the to-be-rendered image; determine, based on the to-be-rendered image, a height value of each pixel in the to-be-rendered image in the space coordinate system; and generate the depth image of the to-be-rendered image based on the height value.

In all embodiment of the present disclosure, the second obtaining module 4552 is preferably further configured to obtain a preset size of a pixel tile; and partition, based on the size of the pixel tile, a plurality of pixels included in the depth image, to obtain at least two pixel tiles, the pixel tiles including a same quantity of pixels.

In all embodiment of the present disclosure, the device preferably further includes a dilation module, and the dilation module is configured to perform dilation processing on each pixel tile, to obtain a dilated pixel tile; and the second obtaining module 4552 is further configured to obtain a depth-of-field parameter of each dilated pixel tile.

In all embodiment of the present disclosure, the depth-of-field parameter preferably includes a maximum value and a minimum value of a circle of confusion of the pixel tile, and the second obtaining module 4552 is further configured to take, for each pixel tile, a difference between the maximum value and the minimum value of the circle of confusion of the pixel tile, to obtain a change value of the circle of confusion of the pixel tile; and classify the at least two pixel tiles based on the change value and the maximum value of the circle of confusion of each pixel tile, to obtain the category to which each pixel tile belongs.

In all embodiment of the present disclosure, the second obtaining module 4552 is preferably further configured to separately perform the following processing on each pixel tile: determining the category to which the pixel tile belongs as a first category when the maximum value of the circle of confusion of the pixel tile is less than a target threshold, the first category being configured for indicating that the pixel tile belongs to a focal region in the to-be-rendered image;

determining the category to which the pixel tile belongs as a second category when the change value of the circle of confusion of the pixel tile is less than a target threshold, the second category being configured for indicating that the pixel tile belongs to a foreground region or a background region in the to-be-rendered image; and determining the category to which the pixel tile belongs as a third category when the change value of the circle of confusion of the pixel tile is not less than a target threshold, the third category being configured for indicating that the pixel tile belongs to an intersection region of the foreground region and the background region in the to-be-rendered image.

In all embodiment of the present disclosure, the second obtaining module 4552 is preferably further configured to: perform region partitioning on the to-be-rendered image, to obtain the focal region, the foreground region, the background region, and the intersection region of the foreground region and the background region of the to-be-rendered image; determine, for each pixel tile based on the depth-of-field parameter, an image region to which the pixel tile belongs in the to-be-rendered image, the image region being one of the focal region, the foreground region, the background region, and the intersection region; and determine the category to which the pixel tile belongs based on the image region to which the pixel tile belongs.

In all embodiment of the present disclosure, the to-be-rendered image preferably includes a focal region, a foreground region, a background region, and an intersection region of the foreground region and the background region, and the blurring processing module 4553 is further configured to: determine a pixel value of each pixel in the pixel region as a blurred pixel value of the corresponding pixel when the category of the pixel tile indicates that the pixel tile belongs to the focal region; determine, for each pixel of the pixel region when the category of the pixel tile indicates that the pixel tile belongs to the foreground region or the background region, a first sampling region corresponding to the pixel and a region weight of each sampling point in the first sampling region, and determine a blurred pixel value of the pixel based on the region weight; determine, for each pixel of the pixel region when the category of the pixel tile indicates that the pixel tile belongs to the intersection region, a second sampling region corresponding to the pixel and a region weight of each sampling point in the second sampling region, and determine a blurred pixel value of the pixel based on the region weight; a quantity of pixels included in the first sampling region being different from a quantity of pixels included in the second sampling region; and generate, for each pixel region, the blurred image based on the blurred pixel value of each pixel in the pixel region.

In all embodiment of the present disclosure, the device preferably further includes a pre-blurring processing module, and the pre-blurring processing module is configured to: obtain, based on the category of the pixel tile corresponding to the pixel region, a pre-blurring processing manner corresponding to the category; perform pre-blurring processing on the pixel region based on the pre-blurring processing manner, to obtain a pre-blurred value of each pixel in the pixel region, and generate a pre-blurred image based on the pre-blurred value; and determine, based on the location of the pixel region in the to-be-rendered image, a pre-blurred region corresponding to the pixel region in the pre-blurred image; and the blurring processing module 4553 is further configured to perform blurring processing on the pre-blurred region corresponding to the pixel region based on the blurring processing manner corresponding to the category, to obtain the blurred image.

In all embodiment of the present disclosure, the blurred image preferably includes a plurality of image tiles, and the device further includes a median filtering module, where the median filtering module is configured to perform the following processing on each pixel in the blurred image: determining an image tile to which the pixel belongs; selecting an intermediate value from pixel values of a plurality of pixels included in the image tile, and determining the intermediate value as a target pixel value of the pixel; and generating a target blurred image based on the target pixel value of each pixel in the blurred image; and the rendering module 4554 is further configured to perform image rendering based on the to-be-rendered image and the target blurred image, to obtain the depth-of-field image corresponding to the to-be-rendered image.

In all embodiment of the present disclosure, the device further includes a third obtaining module, and the third obtaining module is configured to: obtain a region transition image corresponding to the to-be-rendered image, the region transition image being configured for indicating a mixing degree of the foreground region and the background region in the to-be-rendered image; and perform up-sampling processing on the region transition image, to obtain an up-sampled region transition image; and the rendering module 4554 is further configured to: perform up-sampling processing on the blurred image, to obtain an up-sampled blurred image; perform image fusion on the to-be-rendered image and the up-sampled blurred image based on the depth image and the up-sampled region transition image, to obtain a fused image; and perform image rendering on the fused image to obtain the depth-of-field image corresponding to the to-be-rendered image.

An embodiment of the present disclosure provides a computer program product or a computer program. The computer program product or the computer program includes computer instructions, and the computer instructions are stored in a computer-readable storage medium. A processor of an electronic device reads the computer instructions from the computer-readable storage medium, and the processor executes the computer instructions, so that the electronic device performs the method for rendering a depth-of-field image in the embodiment of the present disclosure, for example, the method for rendering a depth-of-field image shown in FIG. 3.

An embodiment of the present disclosure provides a computer-readable storage medium having executable instructions stored thereon. When the executable instructions are executed by a processor, the processor performs the method for rendering a depth-of-field image provided in the embodiment of the present disclosure, for example, the method for rendering a depth-of-field image shown in FIG. 3.

In some embodiments, the computer-readable storage medium may be a memory such as a read-only memory (ROM), a random access memory (RAM), an erasable programmable read-only memory (EPROM), an electrically erasable programmable read-only memory (EEPROM), a flash memory, a magnetic surface memory, an optical disc, or a CD-ROM; or may be various devices including one or any combination of the foregoing memories.

In some embodiments, the executable instructions may be compiled in a form of a program, software, a software module, a script, or code, in any form of a programming language (including a compilation or interpretation language, or a declarative or procedural language), and may be deployed in any form, including being deployed as an independent program or as a module, component, subroutine, or another unit suitable for use in a computing environment.

As an example, the executable instructions may be but are not necessarily corresponding to a file in a file system, and may be stored in a part of a file that stores another program or data, for example, stored in one or more scripts in a Hypertext Markup Language (HTML) document, stored in a single file dedicated to a program under discussion, or stored in a plurality of synchronous files (for example, a file that stores one or more modules, subprograms, or code parts).

As an example, the executable instruction may be deployed on one electronic device for execution, or executed on a plurality of electronic devices located at one location, or executed on a plurality of electronic devices distributed at a plurality of locations and interconnected by using a communications network.

In the embodiments of the present disclosure, related data such as a to-be-rendered image is involved. When the embodiments of the present disclosure are applied to a specific product or technology, corresponding permission or consent needs to be obtained, and collection, use, and processing of the related data need to comply with relevant laws and regulations and standards of a relevant country and region.

In conclusion, embodiments of the present disclosure have the following beneficial effects:

(1) The pixel tiles are classified according to rendering parameters corresponding to different pixel tiles in a rendering process and complexity of the rendering process, so that for pixel tiles of different categories, rendering processes corresponding to the categories are performed, to obtain a final depth-of-field image. In this way, not only a rendering effect when the depth-of-field image is rendered is improved, but also the rendering processes when the depth-of-field image is rendered are reduced, thereby reducing performance consumption, and improving efficiency during image processing.

(2) An effect of approximating that of diaphragm DoF by UE4 on a PC end is achieved by using fewer rendering times and fewer bandwidth, and it is ensured that a high-quality depth-of-field on a mobile end can be provided. In addition, in the present disclosure, a test is also performed on a mobile device. Parameters such as a diagram and a focal distance are adjusted. Different parameters cause different blur policies and shader complexity, and the effect of greatly reducing bandwidth and time consumption can also be achieved.

The foregoing descriptions are merely embodiments of the present disclosure and are not intended to limit the protection scope of embodiments of the present disclosure. Any modification, equivalent replacement, or improvement made within the spirit and principle of embodiments of the present disclosure shall fall within the protection scope of embodiments of the present disclosure.

**Claims**

1. A method for rendering a depth-of-field image, executable by an electronic device and comprising:

    obtaining a depth image of a to-be-rendered image;
    performing pixel tiling on the depth image, to obtain at least two pixel tiles;
    classifying the at least two pixel tiles based on respective depth-of-field parameters of the pixel tiles, to obtain respective categories of the pixel tiles;
    for each category of pixel tiles, determining, for each pixel tile in the category, a pixel region of the respective pixel tile in the to-be-rendered image based on a location of the respective pixel tile in the depth image,
    performing blurring processing on the pixel region based on a blurring processing manner corresponding to the category, to obtain a blurred image; and
    obtaining a depth-of-field image corresponding to the to-be-rendered image based on the to-be-rendered image and the blurred image.

2. The method according to claim 1, wherein the obtaining a depth image of a to-be-rendered image comprises:

obtaining the to-be-rendered image;
constructing a space coordinate system corresponding to the to-be-rendered image;
determining, based on the to-be-rendered image, respective height values of pixels in the to-be-rendered image in the space coordinate system; and
generating the depth image of the to-be-rendered image based on the respective height values of the pixels.

3. The method according to any one of claims 1 to 2, wherein the performing pixel tiling on the depth image to obtain at least two pixel tiles comprises:

obtaining a preset size of a pixel tile; and
partitioning, based on the preset size of the pixel tile, a plurality of pixels comprised in the depth image, to obtain at least two pixel tiles, the pixel tiles comprising a same quantity of pixels.

4. The method according to any one of claims 1 to 3, further comprising: after the performing pixel tiling on the depth image to obtain at least two pixel tiles,

performing dilation processing respectively on the pixel tiles, to obtain dilated pixel tiles,
wherein the respective depth-of-field parameters of the pixel tiles are obtained by obtaining the respective depth-of-field parameters of the dilated pixel tiles.

5. The method according to any one of claims 1 to 4, wherein the depth-of-field parameter comprises a maximum value and a minimum value of a circle of confusion of the pixel tile, and the classifying the at least two pixel tiles based on the respective depth-of-field parameters to obtain respective categories of the pixel tiles comprises:

calculating, for each pixel tile, a difference between the maximum value and the minimum value of the circle of confusion of the pixel tile, to obtain a change value of the circle of confusion of the pixel tile; and
classifying the at least two pixel tiles based on the change value and the maximum value of the circle of confusion of each pixel tile, to obtain the respective categories of the pixel tiles.

6. The method according to claim 5, wherein the classifying the at least two pixel tiles based on the change value and the maximum value of the circle of confusion of each pixel tile to obtain the respective categories of the pixel tiles comprises:
performing the following processing for each pixel tile:

determining the category of the pixel tile as a first category when the maximum value of the circle of confusion of the pixel tile is less than a target threshold, the first category indicating that the pixel tile belongs to a focal region in the to-be-rendered image;
determining the category of the pixel tile as a second category when the change value of the circle of confusion of the pixel tile is less than the target threshold, the second category indicating that the pixel tile belongs to a foreground region or a background region in the to-be-rendered image; and
determining the category of the pixel tile as a third category when the change value of the circle of confusion of the pixel tile is not less than the target threshold, the third category indicating that the pixel tile belongs to an intersection region of the foreground region and the background region in the to-be-rendered image.

7. The method according to any one of claims 1 to 6, wherein the classifying the at least two pixel tiles based on the respective depth-of-field parameters to obtain respective categories of the pixel tiles comprises:

performing region partitioning on the to-be-rendered image, to obtain the focal region, the foreground region, the background region, and the intersection region of the foreground region and the background region of the to-be-rendered image;
for each pixel tile based on the depth-of-field parameter,

determining, an image region of the pixel tile in the to-be-rendered image, the image region being one of the focal region, the foreground region, the background region, and the intersection region; and
determining the category of the pixel tile based on the image region of the pixel tile.

8. The method according to any one of claims 1 to 7, wherein the to-be-rendered image comprises the focal region, the foreground region, the background region, and the intersection region of the foreground region and the background region, and the performing blurring processing on the pixel region based on a blurring processing manner corresponding to the category to obtain a blurred image comprises:

determining a pixel value of each pixel in the pixel region as a blurred pixel value of the pixel when the category of the pixel tile indicates that the pixel tile belongs to the focal region;

determining, for each pixel of the pixel region when the category of the pixel tile indicates that the pixel tile belongs to the foreground region or the background region, a first sampling region corresponding to the pixel and a region weight of each sampling point in the first sampling region, and determining a blurred pixel value of the pixel based on the region weight;

determining, for each pixel of the pixel region when the category of the pixel tile indicates that the pixel tile belongs to the intersection region, a second sampling region corresponding to the pixel and a region weight of each sampling point in the second sampling region, and determining a blurred pixel value of the pixel based on the region weight;

wherein a quantity of pixels comprised in the first sampling region is different from a quantity of pixels comprised in the second sampling region; and

generating, for each pixel region, the blurred image based on the blurred pixel value of each pixel in the pixel region.

9. The method according to any one of claims 1 to 8, further comprising: after the determining a pixel region of the respective pixel tile of the category in the to-be-rendered image based on a location of the respective pixel tile of the category in the depth image,

obtaining, based on the category of the pixel tile corresponding to the pixel region, a pre-blurring processing manner corresponding to the category;

performing pre-blurring processing on the pixel region based on the pre-blurring processing manner, to obtain a pre-blurred value of each pixel in the pixel region, and generating a pre-blurred image based on the pre-blurred value; and

determining, based on the location of the pixel region in the to-be-rendered image, a pre-blurred region corresponding to the pixel region in the pre-blurred image; and

the performing blurring processing on the pixel region based on a blurring processing manner corresponding to the category, to obtain a blurred image comprises:

performing blurring processing on the pre-blurred region corresponding to the pixel region based on the blurring processing manner corresponding to the category, to obtain the blurred image.

10. The method according to any one of claims 1 to 9, wherein the blurred image comprises a plurality of image tiles, and after the performing blurring processing on the pixel region based on a blurring processing manner corresponding to the category, to obtain a blurred image, the method further comprises:

performing the following processing on each pixel in the blurred image: determining an image tile to which the pixel belongs; selecting an intermediate value from pixel values of a plurality of pixels comprised in the image tile, and determining the intermediate value as a target pixel value of the pixel; and

generating a target blurred image based on the target pixel value of each pixel in the blurred image; and

the obtaining a depth-of-field image corresponding to the to-be-rendered image based on the to-be-rendered image and the blurred image comprises:

performing image rendering based on the to-be-rendered image and the target blurred image, to obtain the depth-of-field image corresponding to the to-be-rendered image.

11. The method according to any one of claims 1 to 10, further comprising:

obtaining a region transition image corresponding to the to-be-rendered image, the region transition image indicating a mixing degree of the foreground region and the background region in the to-be-rendered image; and

performing up-sampling processing on the region transition image, to obtain an up-sampled region transition image; and

the obtaining a depth-of-field image corresponding to the to-be-rendered image based on the to-be-rendered image and the blurred image comprises:

performing up-sampling processing on the blurred image, to obtain an up-sampled blurred image;
performing image fusion on the to-be-rendered image and the up-sampled blurred image based on the depth image and the up-sampled region transition image, to obtain a fused image; and
performing image rendering on the fused image to obtain the depth-of-field image corresponding to the to-be-rendered image.

12. A device for rendering a depth-of-field image, comprising:

a first obtaining module configured to: obtain a depth image of a to-be-rendered image, and perform pixel tiling on the depth image, to obtain at least two pixel tiles;
a second obtaining module configured to classify the at least two pixel tiles based on respective depth-of-field parameters of the pixel titles, to obtain respective categories of the pixel tiles;
a blurring processing module configured to:

for each category of pixel tiles, determine, for each pixel tile in the category, a pixel region of the respective pixel tile in the to-be-rendered image based on a location of the respective pixel tile in the depth image, and perform blurring processing on the pixel region based on a blurring processing manner corresponding to the category, to obtain a blurred image; and
a rendering module, configured to obtain a depth-of-field image corresponding to the to-be-rendered image based on the to-be-rendered image and the blurred image.

13. An electronic device, comprising:

a memory, configured to store computer executable instructions; and
a processor, configured to: when executing the computer executable instructions stored in the memory, implement the method for rendering a depth-of-field image according to any one of claims 1 to 11.

14. A computer-readable storage medium, having computer executable instructions stored thereon, configured to: when causing a processor for execution, implement the method for rendering a depth-of-field image according to any one of claims 1 to 11.

15. A computer program product, comprising a computer program or computer executable instructions, the computer program or the computer executable instructions, when executed by a processor, implementing the method for rendering a depth-of-field image according to any one of claims 1 to 11.

Depth-of-field image rendering
system 100

Server 200

Network 300

Terminal 400

Client 401

Display
interface
401-1

## FIG. 1

Electronic device

Memory 450

Operating system 451

Network communication module 452

Presentation module 453

Input processing module 454

Depth-of-field image rendering apparatus 455

First obtaining module 4551

Second obtaining module 4552

Blurring processing module 4553

Rendering module 4554

Network
interface 420

Processor 410

440

User
interface 430

Output
apparatus 431

Input
apparatus 432

## FIG. 2

A server obtains a depth image of a to-be-rendered image, and performs pixel tiling on the depth image, to obtain at least two pixel tiles — 101

Obtain a depth-of-field parameter of each pixel tile, and classify the at least two pixel tiles based on the depth-of-field parameter, to obtain a category to which each pixel tile belongs — 102

Determine, for a pixel tile of each category, a pixel region of each pixel tile of the category in the to-be-rendered image based on a location of the pixel tile of the category in the depth image, and perform blurring processing on the pixel region based on a blurring processing manner corresponding to the category, to obtain a blurred image — 103

Obtain a depth-of-field image corresponding to the to-be-rendered image based on the to-be-rendered image and the blurred image — 104

## FIG. 3

FIG. 4

FIG. 5

FIG. 6

FIG. 7

FIG. 8

FIG. 9

FIG. 10

**FIG. 11**

**FIG. 12**

**FIG. 13**

## INTERNATIONAL SEARCH REPORT

| International application No. |
| --- |
| **PCT/CN2023/132283** |

**A.    CLASSIFICATION OF SUBJECT MATTER**

G06T 7/50(2017.01)i

According to International Patent Classification (IPC) or to both national classification and IPC

**B.    FIELDS SEARCHED**

Minimum documentation searched (classification system followed by classification symbols)

IPC: G06T 7/-, G06T5/-, G06F

Documentation searched other than minimum documentation to the extent that such documents are included in the fields searched

Electronic data base consulted during the international search (name of data base and, where practicable, search terms used)

DWPI, CNABS, WPABS, CNTXT, ENTXT, CJFD, CNKI: 景深, 渲染, 图像, 深度, 像素, 位置, 坐标, 膨胀, 弥散, 对焦, 前景, 背景, depth of field, rendering, image, depth, pixel, position, coordinate, expansion, dispersion, focus, foreground, background,

**C.    DOCUMENTS CONSIDERED TO BE RELEVANT**

| Category* | Citation of document, with indication, where appropriate, of the relevant passages | Relevant to claim No. |
| --- | --- | --- |
| X | CN 112686939 A (TENCENT TECHNOLOGY (SHENZHEN) CO., LTD.) 20 April 2021 (2021-04-20)<br>description, paragraphs 79-227 | 1, 12-15 |
| A | CN 107392986 A (HANGZHOU DIANZI UNIVERSITY) 24 November 2017 (2017-11-24)<br>entire document | 1-15 |
| A | CN 108665494 A (BEIJING ZHONGKE SHIWEI CULTURE TECHNOLOGY CO., LTD.) 16 October 2018 (2018-10-16)<br>entire document | 1-15 |
| A | CN 109146767 A (CHENGDU TOPPLUSVISION SCIENCE & TECHNOLOGY CO., LTD.) 04 January 2019 (2019-01-04)<br>entire document | 1-15 |
| A | WO 2022143922 A1 (SHANGHAI UNITED IMAGING HEALTHCARE CO., LTD.) 07 July 2022 (2022-07-07)<br>entire document | 1-15 |

☐ Further documents are listed in the continuation of Box C.    ☑ See patent family annex.

| | |
| --- | --- |
| *    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **15 February 2024** | **18 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 600 902 A1

## INTERNATIONAL SEARCH REPORT
### Information on patent family members

International application No.

**PCT/CN2023/132283**

| Patent document cited in search report | | | Publication date (day/month/year) | Patent family member(s) | | | Publication date (day/month/year) |
|---|---|---|---|---|---|---|---|
| CN | 112686939 | A | 20 April 2021 | HK | 40042017 | A0 | 27 August 2021 |
| CN | 107392986 | A | 24 November 2017 | CN | 107392986 | B | 16 March 2021 |
| CN | 108665494 | A | 16 October 2018 | None | | | |
| CN | 109146767 | A | 04 January 2019 | None | | | |
| WO | 2022143922 | A1 | 07 July 2022 | US | 2023360308 | A1 | 09 November 2023 |
| | | | | CN | 114694805 | A | 01 July 2022 |

Form PCT/ISA/210 (patent family annex) (July 2022)

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310201486